(19) Europäisches Patentamt
European Patent Office
Office européen des brevets

(11) **EP 4 787 858 A1**

(12) **EUROPEAN PATENT APPLICATION**
published in accordance with Art. 153(4) EPC

(43) Date of publication:
**05.08.2026 Bulletin 2026/32**

(21) Application number: **24871641.7**

(22) Date of filing: **26.08.2024**

(51) International Patent Classification (IPC):
**H04N 19/593** (2014.01)    **H04N 19/70** (2014.01)
**H04N 19/186** (2014.01)

(52) Cooperative Patent Classification (CPC):
**H04N 19/186; H04N 19/593; H04N 19/70**

(86) International application number:
**PCT/JP2024/030185**

(87) International publication number:
**WO 2025/069840 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **27.09.2023   JP 2023164676**

(71) Applicant: **Sharp Kabushiki Kaisha
Sakai City, Osaka 590-8522 (JP)**

(72) Inventors:
• **YASUGI, Yukinobu
  Sakai City, Osaka 590-8522 (JP)**
• **IKAI, Tomohiro
  Sakai City, Osaka 590-8522 (JP)**
• **AONO, Tomoko
  Sakai City, Osaka 590-8522 (JP)**

(74) Representative: **Müller Hoffmann & Partner
Patentanwälte mbB
St.-Martin-Strasse 64
81541 München (DE)**

(54) **VIDEO DECODING DEVICE AND VIDEO ENCODING DEVICE**

(57)    Conventional coding schemes in which a prediction image and a residual image are predicted by using a cross color component convolution model have a problem in that the amount of calculation increases due to parameter derivation of the convolution operation model. A video decoding apparatus includes a prediction parameter derivation unit that derives a cross color component prediction parameter, and a prediction filter unit that applies a cross color component prediction model using the derived prediction parameter to an input image and generates an output image. The prediction parameter is derived by using the prediction parameter of a neighboring block, and the output image is generated from the input image.

**FIG. 9**

**Description**

Technical Field

Cross-Reference of Related Application

This application claims priority to Japanese Patent Application No. 2023-164676 entitled "VIDEO DECODING APPARATUS AND VIDEO CODING APPARATUS" filed on September 27, 2023, the disclosure of which is incorporated herein by reference in its entirety for all purposes.

An embodiment of the present invention relates to a video decoding apparatus and a video coding apparatus.

Background Art

A video coding apparatus which generates coded data by coding a video, and a video decoding apparatus which generates decoded images by decoding coded data are used for efficient transmission or recording of videos.

For example, specific video coding schemes include schemes proposed in, for example, H.264/AVC and High-Efficiency Video Coding (HEVC), and the like.

In such a video coding scheme, images (pictures) constituting a video are managed in a hierarchical structure including slices obtained by splitting an image, Coding Tree Units (CTUs) obtained by splitting a slice, Coding Units (CUs) obtained by splitting a coding tree unit, and Transform Units (TUs) obtained by splitting a coding unit, and are coded/decoded for each CU.

In such a video coding scheme, usually, a prediction image is generated based on a locally decoded image that is obtained by coding/decoding an input image, and a prediction error (which may be referred to also as a "difference image" or a "residual image") obtained by subtracting the prediction image from the input image (source image) is coded. Generation methods of prediction images include inter picture prediction (inter prediction) and intra picture prediction (intra prediction).

Examples of techniques of recent video coding and decoding are described in NPL 1 and NPL 2. NPL 1 discloses cross color component convolution operation model prediction, in which a chroma prediction image is predicted from a luma prediction image by using a convolution operation model. NPL 2 discloses cross color component residual model prediction, in which a chroma pixel residual is predicted using a luma pixel residual by using a convolution operation model.

Citation List

Non Patent Literature

NPL 1: "AHG12: Convolutional cross-component model (CCCM) for intraprediction", Joint Video Exploration Team (JVET) of ITU-T SG 16 WP 3 and ISO/IEC JTC 1/SC 29/WG 11, JVET-Z0064, 2022

NPL 2: "AHG12: Cross-component residual model (CCRM) for inter prediction", Joint Video Exploration Team (JVET) of ITU-T SG 16 WP 3 and ISO/IEC JTC1/SC 29/WG 11, JVET-AD0108, 2023

Summary of Invention

Technical Problem

The coding schemes as described in NPLs 1 and 2 in which a prediction image and a residual image are predicted by using a cross color component convolution model have a problem in that the amount of calculation increases due to parameter derivation of the convolution operation model.

The present invention has an object to reduce an increase in the amount of calculation even in a case that a convolution operation model is used.

Solution to Problem

In order to solve the problem described above, a video decoding apparatus according to an aspect of the present invention includes a prediction parameter derivation unit configured to derive a cross color component prediction parameter, and a prediction filter unit configured to apply a cross color component prediction model to an input image by using the cross color component prediction parameter and generate an output image. The prediction parameter derivation unit includes a case of deriving the cross color component prediction parameter of a target block by using a prediction parameter of a neighboring region, and a case of deriving the cross color component prediction parameter of the target block from a luma decoded image of the neighboring region and a chroma decoded image of the neighboring region or a luma prediction image of the target block and a chroma prediction image of the target block. The prediction filter unit generates the chroma prediction image of the target block by using the derived cross color component prediction parameter of the target block.

Advantageous Effects of Invention

According to an aspect of the present invention, an increase in the amount of calculation can be reduced even in a case that a convolution operation model is used.

Brief Description of Drawings

FIG. 1 is a schematic diagram illustrating a configuration of an image transmission system according to the present embodiment.

FIG. 2 is a diagram illustrating a hierarchical structure of data of a coding stream.

FIG. 3 is a schematic diagram illustrating types (mode numbers) of intra prediction modes.

FIG. 4 is a schematic diagram illustrating a configuration of a video decoding apparatus.

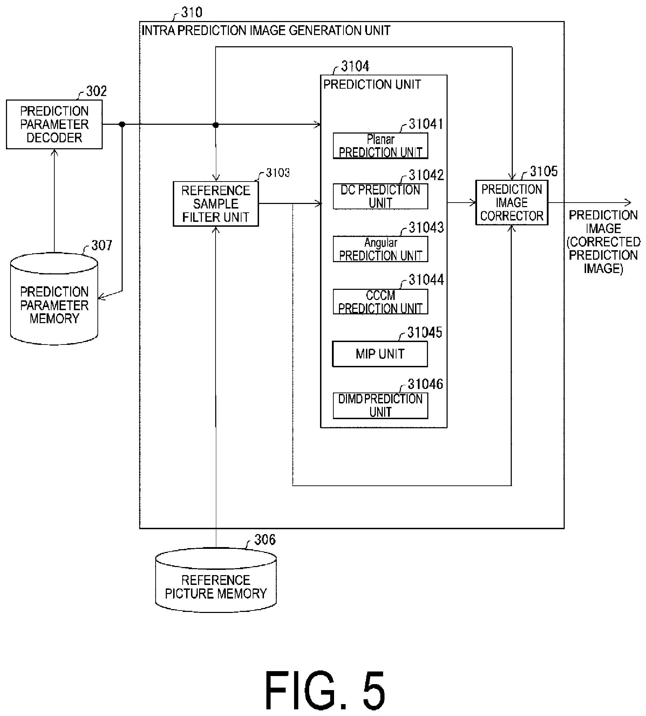

FIG. 5 is a schematic diagram illustrating a configuration of an intra prediction image generation unit.

FIG. 6 is a schematic diagram illustrating a configuration of an inter prediction image generation unit.

FIG. 7 is a syntax table illustrating syntax of an intra prediction parameter.

FIG. 8 is a syntax table illustrating syntax of an inter prediction parameter.

FIG. 9 is a schematic diagram illustrating a configuration of a CCxM prediction unit.

FIG. 10 is a schematic diagram illustrating a configuration of a CCCM prediction unit.

FIG. 11 is a schematic diagram illustrating a configuration of a CCRM prediction unit.

FIG. 12 is a schematic diagram illustrating another configuration of the CCCM prediction unit.

FIG. 13 is a schematic diagram illustrating another configuration of the CCRM prediction unit.

FIG. 14 is a block diagram illustrating a configuration of a video coding apparatus.

Description of Embodiments

First Embodiment

Embodiments of the present invention will be described below with reference to the drawings.

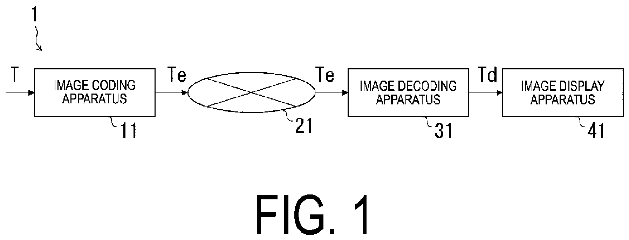

FIG. 1 is a schematic diagram illustrating a configuration of an image transmission system 1 according to the present embodiment.
The image transmission system 1 is a system in which a coding stream obtained by coding a coding target image is transmitted, the transmitted coding stream is decoded, and thus an image is displayed. The image transmission system 1 includes a video coding apparatus (image coding apparatus) 11, a network 21, a video decoding apparatus (image decoding apparatus) 31, and a video display apparatus (image display apparatus) 41.
An image T is input to the video coding apparatus 11.
The network 21 transmits a coding stream Te generated by the video coding apparatus 11 to the video decoding apparatus 31. The network 21 is the Internet, a Wide Area Network (WAN), a Local Area Network (LAN), or a combination thereof. The network 21 is not necessarily limited to a bi-directional communication network, and may be a unidirectional communication network configured to transmit broadcast waves of digital terrestrial television broadcasting, satellite broadcasting, or the like. The network 21 may be replaced by a storage medium on which the coding stream Te is recorded, such as a Digital Versatile Disc (DVD) (trade name) or a Blu-ray Disc (BD) (trade name).

The video decoding apparatus 31 decodes each of the coding streams Te transmitted from the network 21 and generates one or multiple decoded images Td.

The video display apparatus 41 displays all or part of one or multiple decoded images Td generated by the video decoding apparatus 31. For example, the video display apparatus 41 includes a display device such as a liquid crystal display and an organic Electro-luminescence (EL) display. Examples of display types include stationary, mobile, and HMD. In a case that the video decoding apparatus 31 has a high processing capability, an image having high image quality is displayed, and in a case that the video decoding apparatus has a lower processing capability, an image which does not require high processing capability and display capability is displayed.

Operators

Operators used in the present specification will be described below.

>> indicates a right bit shift, << indicates a left bit shift, & indicates a bitwise AND, | indicates a bitwise OR, ^ indicates a bitwise XOR (exclusive disjunction), |= indicates an OR assignment operator, ! indicates a logical negation (NOT), && indicates a logical product (AND), and || indicates a logical disjunction (OR).

x ? y:z is a ternary operator that takes y if x is true (not 0) and takes z if x is false (0).

Clip3(a, b, c) is a function to clip c in a value from a to b, and a function to return a in a case that c is smaller than a (c < a), return b in a case that c is greater than b (c > b), and return c in the other cases (provided that a is smaller than or equal to b (a <= b)).

Clip1Y(c) is an operator set equal to a = 0 and b = (1 << BitDepthY) - 1 in Clip3(a, b, c). BitDepthY is a luma bit depth.

abs(a) is a function that returns the absolute value of a.

Floor(a) is a function that returns the maximum integer equal to or less than a.

Log2(a) is a function that returns a logarithm to base 2.

Ceil(a) is a function that returns the minimum integer equal to or greater than a.

Round(a) is a function that returns an integer close to a by rounding processing.

Int(a) is a function that returns the integer value of a. It may be Round, Floor, or Ceil.

a/d represents division of a by d (round down decimal places).

Min(a) is a function that returns the smaller value between a and b.

Structure of Encoding Stream Te

Prior to the detailed description of the video coding apparatus 11 and the video decoding apparatus 31 according to the present embodiment, a data structure of the coding stream Te generated by the video coding apparatus 11 and decoded by the video decoding apparatus 31 will be described.

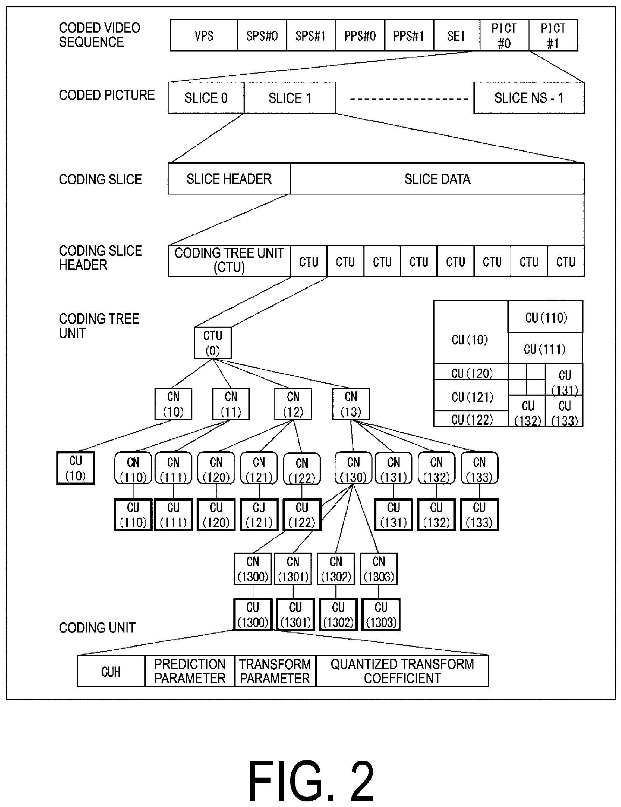

FIG. 2 is a diagram illustrating a hierarchical structure of data of the encoding stream Te. The coding stream Te includes, as an example, a sequence and multiple pictures constituting the sequence. FIG. 2 illustrates a coded video sequence that defines a sequence SEQ, a coded picture that defines a picture PICT, a coding slice that defines a slice S, coding slice data that defines slice data, coding tree units included in coding slice data, and coding units included in each coding tree unit.

Coded Video Sequence

In the coded video sequence, a set of data referred to by the video decoding apparatus 31 to decode a sequence SEQ to be processed is defined. As illustrated in the coded video sequence of FIG. 2, the sequence SEQ includes a Video Parameter Set (VPS), Sequence Parameter Sets (SPSs), Picture Parameter Sets (PPSs), pictures PICT, and Supplemental Enhancement Information (SEI).

The video parameter set VPS defines, in a video including multiple layers, a set of coding parameters common to multiple video images and a set of coding parameters relating to multiple layers and individual layers included in the video.

In the sequence parameter sets SPSs, a set of coding parameters referred to by the video decoding apparatus 31 to decode a target sequence is defined. For example, a width and a height of a picture are defined. Note that multiple SPSs may exist. In that case, any of the multiple SPSs is selected from the PPS.

In the picture parameter sets (PPS), a set of coding parameters that the video decoding apparatus 31 refers to in order to decode each picture in the target sequence is defined. For example, a PPS includes a reference value for a quantization step size used in picture decoding (pic_init_qp_minus26) and a flag indicating application of weighted prediction (weighted_pred_flag). Note that multiple PPSs may exist. In that case, any of the multiple PPSs is selected from each picture in a target sequence.

Coded Picture

In the coded picture, a set of data referred to by the video decoding apparatus 31 to decode a picture PICT to be processed is defined. As illustrated in the coded picture of FIG. 2, a picture PICT includes slices 0 to NS-1 (where NS is the total number of slices included in the picture PICT).

Note that, in a case that it is not necessary to distinguish each of the slice 0 to the slice NS-1 below, numeric suffixes of reference signs may be omitted. The same applies to other data with suffixes included in the coding stream Te which will be described below.

Coding Slice

In each coding slice, a set of data referred to by the video decoding apparatus 31 to decode a slice S to be processed is defined. Each slice includes a slice header and slice data as illustrated in the coding slice of FIG. 2.

The slice header includes a coding parameter group referred to by the video decoding apparatus 31 to determine a decoding method for a target slice. Slice type indication information (slice_type) indicating a slice type is one example of a coding parameter included in the slice header.

Examples of slice types that can be indicated by the slice type indication information include (1) an I slice for which only intra prediction is used for coding, (2) a P slice for which unidirectional prediction or intra prediction is used for coding, (3) a B slice for which unidirectional prediction, bidirectional prediction, or intra prediction is used for coding. Note that the inter prediction is not limited to uni-prediction and bi-prediction, and a prediction image may be generated by using a larger number of reference pictures. Hereinafter, in a case of a slice being referred to as a P or B slice, it indicates a slice including a block in which inter prediction can be used.

Note that the slice header may include a reference to the picture parameter set PPS (pic_parameter_set_id).

Coding Slice Data

In coding slice data, a set of data referred to by the video decoding apparatus 31 to decode slice data to be processed is defined. Slice data includes CTUs as illustrated in the coding slice header of FIG. 2. A CTU is a block in a fixed size (for example, 64 x 64) constituting a slice, and may also be called a Largest Coding Unit (LCU).

Coding Tree Unit

In the coding tree unit of FIG. 2, a set of data that is referred to by the video decoding apparatus 31 to decode the CTU to be processed is defined. A CTU is split into coding units CU which are basic coding processing units through recursive Quad Tree (QT) splitting, Binary Tree (BT) splitting, or Ternary Tree (TT) splitting. The BT split and the TT split are collectively referred to as Multi Tree (MT) split. A node of a tree structure obtained by recursive quad tree split is referred to as a Coding Node. An intermediate node of a quad tree, a binary tree, and a ternary tree is a coding node, and a CTU itself is also defined as the highest coding node.

Coding Unit

As illustrated in the coding unit of FIG. 2, a set of data referred to by the video decoding apparatus 31 to decode the coding unit to be processed is defined. Specifically, a CU includes a CU header CUH, a prediction parameter, a transform parameter, a quantized transform coefficient, and the like. In the CU header, a prediction mode and the like are defined.

The prediction processing may be performed for each CU or performed for each sub-CU, the sub-CU being obtained by further splitting the CU. In a case that a CU and a sub-CU have an equal size, the number of sub-CUs in the CU is one. In a case that a CU is larger in size than a sub-CU, the CU is split into sub-CUs. For example, in a case that the CU has a size of 8 x 8, and the sub-CU has a size of 4 x 4, the CU is split into four sub-CUs including two sub-CUs split horizontally and two sub-CUs split vertically.

There are two types of predictions (prediction modes), which are intra prediction and inter prediction. Intra prediction refers to prediction in the same picture, and inter prediction refers to prediction processing performed between different pictures (for example, between pictures of different display times, and between pictures of different layer images).

Although transform and quantization processing is performed for each CU, entropy coding of a quantized transform coefficient may be performed for each subblock such as 4 x 4.

Prediction Parameters

A prediction image is derived by prediction parameters associated with blocks. The prediction parameters include intra prediction and inter prediction parameters.

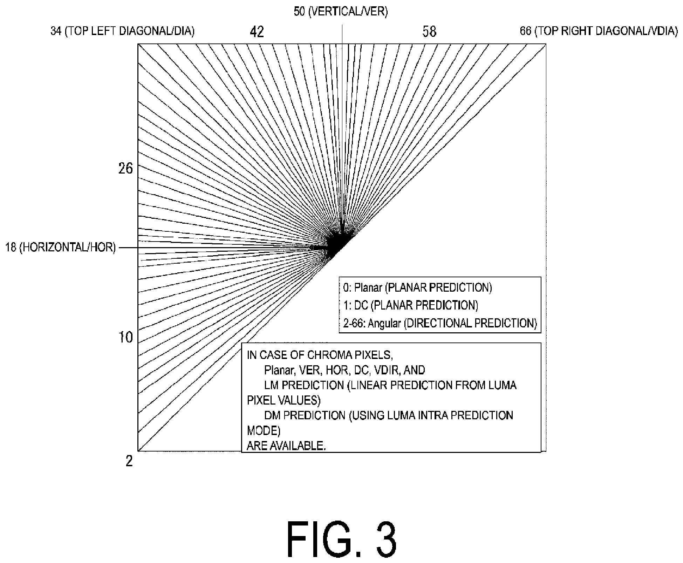

The intra prediction parameters include a luma prediction mode IntraPredModeY and a chroma prediction mode IntraPredModeC. FIG. 3 is a schematic diagram illustrating types (mode numbers) of intra prediction modes. As illustrated in the figure, there are 67 types (0 to 66) of intra prediction modes, for example. For example, there are planar prediction (0), DC prediction (1), and angular prediction (2 to 66). In addition, as the chroma prediction mode, Linear Model (LM) prediction such as cross color component linear model (Cross Component Linear Model (CCLM)) prediction and Multi Mode Linear Model (MMLM) prediction may be used, or convolutional cross color component model (Convolutional Cross Component Model (CCCM)) prediction may be used. Syntax elements for deriving parameters related to CCCM prediction include, for example, a CCCM flag cccm_flag, a CCCM merge flag cccm_merge_flag, a CCCM merge index cccm_merge_idx, and a CCCM filter index cccm_multi_flt_idx. The CCCM merge index cccm_merge_idx is coded only in a case of application of CCCM merge, and indicates a target to be merged. Note that, in convolutional cross color component model prediction, prediction is performed using a sum of products of an input signal derived from multiple reference pixels around a target pixel and a weight coefficient (prediction parameter). Convolution means that a positional relationship (dxK and dyK to be described later) between the target pixel and its surrounding pixels and the weight coefficient (a to be described later) are not dependent upon the position of the target pixel. The input signal derived from multiple reference pixels may simply be the multiple reference pixels themselves, or may be a quadratic function or a cubic function thereof. The input is not limited to the pixels around the target pixel, and coordinate values or the like may be additionally input. The prediction parameter a may include an offset and a shift value.

Inter prediction parameters include prediction list utilization flags predFlagL0 and predFlagL1, reference picture indices refIdxL0 and refIdxL1, and motion vectors mvL0 and mvL1. predFlagL0 and predFlagL1 are flags indicating whether reference picture lists (L0 list and L1 list) are used, and in a case that the value of each of the flags is 1, a corresponding reference picture list is used. Note that, in a case that the present specification mentions "a flag indicating whether XX is applied", the flag indicating a value other than 0 (for example, 1) means a case that XX is applied, and the flag indicating 0 means a case that XX is not applied, and 1 is treated as true and 0 is treated as false in a logical negation, a logical product, and the like (hereinafter, the same applies). However, other values can be used for true values and false values in real apparatuses and methods.

Syntax elements for deriving the inter prediction parameters include, for example, a merge flag merge_flag (general_merge_flag), a merge index merge_idx, merge_subblock_flag, regulare_merge_flag, ciip_flag, merge_gpm_partition_idx, merge_gpm_idx0, merge_gpm_idx1, inter_pred_idc, a reference picture index refIdxLX, mvp_LX_idx, a difference vector mvdLX, and a motion vector resolution mode amvr_mode. merge_subblock_flag is a flag indicating whether the inter prediction of each subblock is used. regulare_merge_flag is a flag indicating whether a normal merge mode or MMVD is used. ciip_flag is a flag indicating whether or not a combined inter-picture merge and intra-picture prediction (CIIP) mode is used. merge_gpm_partition_idx is an index indicating a split shape of a GPM mode. merge_gpm_idx0 and merge_gpm_idx1 are each an index indicating a merge index of the GPM mode. inter_pred_idc is an inter prediction indicator for selecting a reference picture to be used in an AMVP mode. mvp_LX_idx is a prediction vector index for deriving the motion vector.

As the inter prediction mode, color component error model (Cross-component residual model (CCRM)) prediction may be used. CCRM is a method in which a chroma prediction pixel is predicted with a model using a convolution operation on a luma locally decoded pixel.

Syntax elements for deriving parameters related to CCRM used in inter prediction include, for example, a CCRM flag ccrm_flag, a CCRM merge flag ccrm_merge_flag, a CCRM merge index ccrm_merge_idx, and a CCRM filter index ccrm_multi_flt_idx. ccrm_flag is a flag indicating whether or not to apply CCRM to a chroma prediction image. The CCRM merge flag is a flag indicating whether or not to use merge processing in a case of derivation of CCRM parameters, and is coded only in a case of application of CCRM. In a case that the CCRM flag is false (0), the CCRM merge flag is false (0). The CCRM merge index ccrm_merge_idx is coded only in a case of application of CCRM merge, and indicates a target to be merged. The CCRM filter index ccrm_multi_flt_idx is an index for selecting a filter to be applied to an input image in a case of derivation of a CCRM prediction image.

Configuration of Video Decoding Apparatus

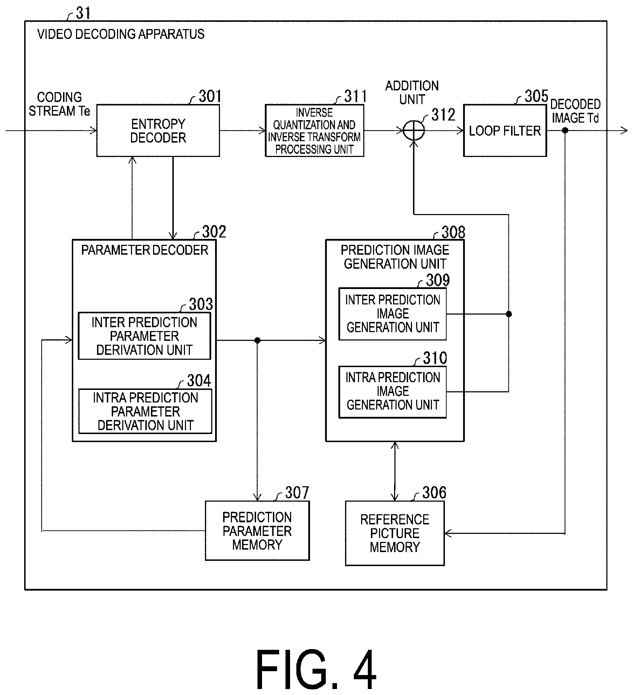

A configuration of the video decoding apparatus 31 (FIG. 4) according to the present embodiment will be described.

The video decoding apparatus 31 includes an entropy decoder 301, a parameter decoder (a prediction image decoding apparatus) 302, a loop filter 305, a reference picture memory 306, a prediction parameter memory 307, a prediction image generation unit (prediction image generation apparatus) 308, an inverse quantization and inverse transform processing unit 311, and an addition unit 312. Note that a configuration in which the loop filter 305 is not included in the video decoding apparatus 31 may be used in accordance with the video coding apparatus 11 described below.

The parameter decoder 302 includes an inter prediction parameter derivation unit 303 and an intra prediction parameter derivation unit 304. The prediction image generation unit 308 includes an inter prediction image generation unit 309 and an intra prediction image generation unit 310.

Although an example in which CTU and CU are used as a unit of processing will be described below, the unit of processing is not limited to this example, and processing may be performed for each sub-CU. Alternatively, the CTU and the CU may be interpreted as a block and the sub-CU as a subblock, and processing may be performed in units of blocks or subblocks.

The entropy decoder 301 performs entropy decoding on the coding stream Te input from the outside and separates and decodes individual codes (syntax elements). The entropy coding includes a method in which variable-length coding of syntax elements is performed by using a context (probability model) adaptively selected according to a type of syntax element and a surrounding condition, and a method in which variable-length coding of syntax elements is performed by using a predetermined table or formula. In the former Context Adaptive Binary Arithmetic Coding (CABAC), probability models updated for each coded or decoded picture (slice) are stored in a memory. Then, as the initial state of the context of a P picture or a B picture, the probability model of a picture using quantization parameters of the same slice type and the same slice level is configured out of the probability models stored in the memory. The initial state is used for coding and decoding processing. The separated codes include prediction information to generate a prediction image, a prediction error to generate a difference image, and the like.

The entropy decoder 301 outputs the separated codes to the parameter decoder 302. Examples include a prediction mode predMode, general_merge_flag, merge_idx, inter_pred_idc, refIdxLX, mvp_LX_idx, mvdLX, amvr_mode, a CCCM flag cccm_flag, a CCCM merge flag cccm_merge_flag, a CCCM filter index cccm_multi_flt_idx, a CCRM flag ccrm_flag, a CCRM merge flag ccrm_merge_flag, a CCRM filter index ccrm_multi_flt_idx, and the like. Which code is to be decoded is controlled based on an indication of the parameter decoder 302.

The loop filter 305 is a filter provided in the coding loop, and is a filter that removes block distortion and ringing distortion and improves image quality. The loop filter 305 applies a filter such as a deblocking filter, a sample adaptive offset (SAO), and an adaptive loop filter (ALF) to a decoded image of a CU generated by the addition unit 312.

The reference picture memory 306 stores the decoded image of the CU generated by the addition unit 312 in a predetermined position for each target picture and target CU.

The prediction parameter memory 307 stores a prediction parameter in a position predetermined for each CTU or CU to be decoded. Specifically, the prediction parameter memory 307 stores the parameter decoded by the parameter decoder 302, the prediction mode predMode separated by the entropy decoder 301, and the like.

To the prediction image generation unit 308, predMode, the prediction parameter, and the like are input. The prediction image generation unit 308 reads a reference picture from the reference picture memory 306. The prediction image generation unit 308 generates a prediction image of a block or a subblock by using the prediction parameter and the read reference picture (reference block) in the prediction mode indicated by predMode. Here, the reference block refers to a set of pixels (referred to as a block because they are normally rectangular) on the reference picture and is a region that is referred to for generating the prediction image.

CCxM PREDICTION UNIT

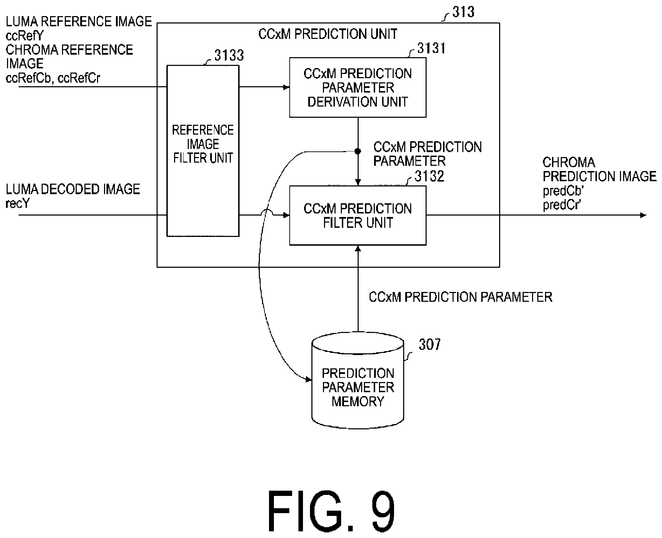

As illustrated in FIG. 9, the CCxM prediction unit 313 includes a CCxM prediction parameter derivation unit 3131, a CCxM prediction filter unit 3132, and a reference image filter unit 3133. The CCxM prediction parameter derivation unit 3131 receives an input of a luma reference image ccRefY and chroma reference images ccRefCb and ccRefCr, and derives a parameter (CCxM prediction parameter) of a cross color component prediction model. The CCxM prediction filter unit 3132 receives an input of a luma locally decoded image recY, and generates chroma prediction images predCb' and predCr', based on the derived CCxM prediction parameter.

Each of the reference images ccRefY, ccRefCb, and ccRefCb used for prediction parameter derivation may be a decoded image of a target block, or may be a decoded image of a neighboring block. Alternatively, it may be a prediction image of a target block, or may be a prediction image of a neighboring block. For example, ccRefY, ccRefCb, and ccRefCb are the luma decoded image recY and chroma decoded images recCb and recCr of a neighboring block. Alternatively, as another example, ccRefY, ccRefCb, and ccRefCb are a luma prediction image predY and chroma prediction images predCb and predCr of a target block.

The reference image filter unit 3133 may apply filter processing to the input image to the CCxM prediction parameter derivation unit and the input image to the CCxM prediction filter unit. Note that, in the following description, the filter processing on the reference images ccRefY, ccRefCb, and ccRefCr and the decoded image recY may be a weighted sum of each pixel and neighboring pixels. The number of input pixels may be reduced through application of downsampling processing. Furthermore, for example, multiple different types of filter processing with different weight values or the like may be applied. In this case, the reference images to which different filters are applied are referred to as ccRefY0, ccRefY1, recY0, recY1, or the like to be distinguished. The reference image filter unit 3133 may select the filter processing to be applied, based on a filter control parameter ccxmMultiFltIdx. The value of the filter control parameter ccxmMultiFltIdx may be set and provided by a processing unit that uses the CCxM prediction unit 313, such as the CCCM prediction unit 31044 and the CCRM prediction unit 3096. For example, the CCCM prediction unit 31044 may provide the syntax element cccm_multi_flt_idx to the CCxM processing unit 313 as ccxmMultiFltIdx. Similarly, the CCRM prediction unit 3096 may provide the syntax element ccrm_multi_flt_idx to the CCxM processing unit 313 as ccxmMultiFltIdx.

The CCxM prediction parameter derivation unit 3131 derives a parameter (CCxM prediction parameter) of a function for deriving the chroma reference images ccRefCb and ccRefCr from the luma reference image ccRefY, and stores the parameter in the prediction parameter memory 307.

For derivation of the CCxM prediction parameter, the least squares method is used, for example, and in a function (a linear function, a convolution operation model) for converting the luma reference image ccRefY into the chroma reference images ccRefCb and ccRefCr, coefficients of the function are derived for each set of ccRefY and ccRefCb and ccRefY and ccRefCr. The coefficients of the function may be a coefficient a[i] and an offset b used to multiply the input image, for example. A range of the index i is determined based on the number numCCXM of CCxM prediction parameters. The number numCCXM of CCxM prediction parameters may be a fixed value, or may be set by another processing unit that controls the CCxM prediction unit 313. For example, it can be changed as in numCCXM = 7 in a case of being used by the CCCM prediction unit 31044, numCCXM = 8 in a case of being used by the CCRM prediction unit 3096, or the like. The value of numCCXM is not limited to this, and may be another number, such as 2, 3, 4, 5, or 6.

CCxM Prediction Parameter Derivation Unit 3131

The CCxM prediction parameter derivation unit 3131 derives temporary variables tempY and tempC from reference images ccRefY[] and ccRefC[] (= ccRefCb or ccRefCr) in a reference region (x, y) and offsets (dxK, dyK). K is 0 to 4, for example, and is used to distinguish the offsets of each pixel and its surrounding pixels. Note that (x, y) used herein is luma coordinates.

$$\text{for } ((x, y) \text{ in ccRefY}) \{$$

$$\text{tempY[cnt][0]} = \text{ccRefY[x + dx0 * SubWidthC][x + dy0 * SubHeightC]}$$

$$\text{tempY[cnt][1]} = \text{ccRefY[x + dx1 * SubWidthC][y + dy1 * SubHeightC]}$$

$$\text{tempY[cnt][2]} = \text{ccRefY[x + dx2 * SubWidthC][y + dy2 * SubHeightC]}$$

$$\text{tempY[cnt][3]} = \text{ccRefY[x + dx3 * SubWidthC][y + dy3 * SubHeightC]}$$

$$\text{tempY[cnt][4]} = \text{ccRefY[x + dx4 * SubWidthC][y + dy4 * SubHeightC]}$$

$$\text{tempY[cnt][5]} = \text{nonlinear(tempY[0][cnt])}$$

$$\text{tempY[cnt][6]} = 1$$

$$\text{tempC[cnt]} = \text{ccRefC[x/SubWidthC][y/SubHeightC]}$$

$$\text{cnt} = \text{cnt} + 1$$

$$\}$$

Here, SubWidthC and SubHeightC are values determined by a chroma format. SubWidthC = 1 and SubHeightC = 1 in a monochrome format, SubWidthC = 2 and SubHeightC = 2 in a 4:2:0 format, SubWidthC = 2 and SubHeightC = 1 in a 4:2:2 format, and SubWidthC = 1 and SubHeightC = 1 in a 4:4:4 format. nonlinear is, for example, a function as follows. nonlinear(x) = x * x + ((1 << (bitDepth - 1)) >> bitDepth)

Furthermore, (dx0, dy0), (dx1, dy1), (dx2, dy2), (dx3, dy3), and (dx4, dy4) are (0, 0), (-1, 0), (1, 0), (0, -1), and (0, 1), for example. In this example, the target pixel (x, y) and its top, bottom, right, and left surrounding pixels are used.

The CCxM prediction parameter derivation unit 3131 derives the following matrix sumXX and vector sumXY from the temporary images tempY and tempC. In the following, numCCXM = 7.

$$\text{for } (i = 0; i < \text{numCCXM}; i++) \{$$

$$\text{for } (j = i; j < \text{numCCXM}; j++) \{$$

$$\text{sumXX}[i][j] = \text{sumXX}[j][i] = \Sigma(\text{tempY}[i][\text{cnt}] * \text{tempY}[j][\text{cnt}])$$

$$\text{sumXY}[i] = \Sigma(\text{tempY}[i][\text{cnt}] * \text{tempC}[\text{cnt}])$$

$$\}$$

$$\}$$

Here, $\Sigma$ represents a sum related to the temporary variable cnt.

As in the following example, sumXX and sumXY may be directly derived without deriving the temporary variable cnt.

```
for ((x,y) in ccRefY {
}
```

Furthermore, a normalization term reg is added to a diagonal component.

$$\text{sumXX}[i][i] = \text{sumXX}[i][i] + \text{reg}$$

$$\text{reg} = (1 << (\text{bitDepth} - 1))$$

The CCxM prediction parameter derivation unit 3131 derives cparam[k] and k = 0, ..., numCCXM - 1 by using a linear operation corresponding to cparam[k] = sumXY[k] * inverse(sumXX). Here, inverse(X) is an inverse matrix of X.

```
a[0] = cparam[0]
a[1] = cparam[1]
a[2] = cparam[2]
...
```

$$a[\text{numCCXM} - 2] = \text{cparam}[\text{numCCXM} - 2]$$

$$b = a[\text{numCCXM} - 1] = \text{cparam}[\text{numCCXM} - 1]$$

As in the above, the CCxM prediction unit 313 derives the filter coefficient for converting ccRefY into ccRefC, i.e., the prediction parameter a[]. Here, ccRefC is ccRefCb or ccRefCr, and thus the CCxM prediction unit 313 derives two sets of the prediction parameters a[].

Regarding tempY, surrounding pixels at different positions may be used for each target pixel on the reference image ccRefY, based on ccxmMultiFltIdx. For example, the following pseudocode is used. Note that derivation of sumXX and sumXY is omitted as it is similar to the already described method.

For example, in the above expression, (dx0, dy0), (dx1, dy1), (dx2, dy2), and (dx3, dy3) may be (0, 0), (-1, 0), (1, 0), and (0, 1). This is an example using the target pixel and pixels at left, right, and top positions of the target pixel for each target pixel.

The following else-if clause is an example of a case that ccxmMultiFltIdx is 2.

For example, in the above expression, (dx0, dy0), (dx1, dy1), (dx2, dy2), (dx3, dy3), (dx4, dy4), and (dx5, dy5) may be (0, 0), (-1, 0), (1, 0), (0, -1), (-1, -1), and (1, -1). This is an example using the target pixel and pixels at left, right, top, top left, and top right positions of the target pixel as the locally decoded image.

The following else-if clause is an example of a case that ccxmMultiFltIdx is 3.

```
tempY[2] = ccRefY[x+dx2*SubWidthC][y+dy2*SubHeightC]

}
```

For example, in the above expression, (dx0, dy0), (dx1, dy1), (dx2, dy2), (dx3, dy3), (dx4, dy4), and (dx5, dy5) may be (0, 0), (1, -1), (-1, 1), (0, 0), (1, -1), and (-1, 1). recY0 and recY1 are obtained by the reference pixel filter unit 3133 applying different filters to recY. This is an example using two sets of, with changed filters, the target pixel and pixels at top right and bottom left positions of the target pixel as the locally decoded image.

Note that the CCxM prediction unit may downsample ccRefY into an image ccRefYs having the same size as the chroma images ccRefCb and ccRefCr by using the reference pixel filter 3133 and use ccRefY. In this case, (x, y) is chroma coordinates. The following is an example of a case that ccxmMultiFltIdx is 1.

$$\texttt{tempY[3] = ccRefY[x+dx3][y+dy3]}$$

}

Also in a case that ccxmMultiFltIdx has another value, similarly, conversion of coordinates using SubWidthC and SubHeightC is unnecessary.

In this manner, the CCxM prediction parameter derivation unit may change a method of referring to pixels of the input image depending on ccxmMultiFltIdx. Note that ccxmMultiFltIdx is also referred to by the CCxM prediction filter unit to be described later, and changes the method of referring to pixels of the input image with a method corresponding to the CCxM prediction parameter derivation unit.

The CCxM prediction unit 313 stores the CCxM prediction parameter derived for a certain block in the prediction parameter memory 307. The parameter stored in the prediction parameter memory may be associated with a processing block. For example, the parameter derived through control of the CCCM prediction unit may be associated with a specific PU to be stored, and the parameter derived through control of the CCRM prediction unit 3096 may be associated with a specific TU.

In a case that true (1) is provided for a variable ccxmMergeFlag, the CCxM prediction unit 313 performs merge (combining) processing by using a CCxM prediction parameter a'[] derived by the CCxM prediction parameter derivation unit 3131 and stored in the prediction parameter memory 307 or a prescribed default parameter a_def[], and thereby derives a new CCxM prediction parameter. The variable ccxmMergeFlag is set equal to a value of cccm_merge_flag in a case that the CCxM prediction unit is used from the CCCM prediction unit, and is set equal to a value of ccrm_merge_flag in a case that the CCxM prediction unit is used from the CCRM prediction unit, for example.

The CCxM prediction filter unit 3132 may derive the prediction images predCb' and predCr' by using the CCxM prediction parameter derived through merging. In this case, the CCxM prediction unit 313 may refer to a CCxM prediction filter parameter a[i] of a block including coordinates (x, y) as a'[x][y][i], and thereby derive a new prediction parameter.

The CCxM prediction unit 3131 may use a CCxM prediction parameter a'[xC + nW][yC - 1][i] of (x, y) = (xC + nW, yC - 1) being a top neighboring block A as the CCxM prediction parameter a[i]. The top left coordinates of the block are represented by (xC, yC), the width of the block is represented by nW, and the height of the block is represented by nH. Similarly, a CCxM prediction parameter a'[xC - 1][yC + nH - 1][i] of (x, y) = (xC - 1, yC + nH - 1) being a left neighboring block L may be used as the CCxM prediction parameter a[i]. A position N to be referred to may be changed according to a merge direction of the CCxM prediction filter (a position of the block referred to by the CCxM prediction filter 3132) or a value of a variable ccxmMergeIdx for selecting the prediction parameter to be used for merging. For the value of ccxmMergeIdx, the left neighboring block (L) may be selected in a case that ccxmMergeIdx = 0, and the top neighboring block (A) may be selected in a case that ccxmMergeIdx = 1, for example. The value of the variable ccxmMergeIdx may be set from the outside of the CCxM prediction unit. For example, the value of cccm_merge_idx is set in a case that the CCCM prediction unit uses the CCxM prediction unit, and the value of ccrm_merge_idx is set in a case that the CCRM prediction unit uses the CCxM prediction unit. Alternatively, a prescribed offset may be added and provided to each prediction unit. For example, the value of cccm_merge_idx+CCCM_MERGE_IDX_OFFSET may be set in a case that the CCCM prediction unit uses the CCxM prediction unit, and the value of ccrm_merge_idx+CCRM_MERGE_IDX_OFFSET may be set in a case that the CCRM prediction unit uses the CCxM prediction unit. This can enhance coding efficiency by narrowing value ranges of cccm_merge_idx and ccrm_merge_idx.

if (ccxmMergeFlag)

  if (ccxmMergeIdx == 0)

    a[i] = a'[xC - 1][yC + nH - 1][i] // a = a'L

  else if (ccxmMergeIdx == 1)

    a[i] = a'[xC + nW - 1][yC - 1][i] // a = a'L

The same holds true for a description that the position N is derived based on availability of a neighboring block and the parameter a' of the position N is used (the same applies hereinafter).

$$\text{if (ccxmMergeFlag)}$$
$$\text{if (ccxmMergeIdx == 0) N = L}$$
$$\text{else if (ccxmMergeIdx == 1) N = A}$$
$$a = a'N$$

In this manner, for all "i"s, the prediction parameter a[i] of the target block is set using the value acquired from the top neighboring block or the left neighboring block. A CCxM prediction parameter a'L of the left neighboring block may be used in a case that the CCxM prediction parameter of the left neighboring block is available, and a CCxM prediction parameter a'A of the top neighboring block may be used in a case that the CCxM prediction parameter of the top neighboring block is available. In other words, the CCxM prediction parameter available to a neighboring block may be set equal to the CCxM prediction parameter of the target block.

In a case that both the blocks are available, a value (for example, an average value) derived from two CCxM prediction parameters may be used.

$$a[i] = a[xC + nW - 1][yC - 1][i] // a = a A$$

In the above example, decoding of the parameters provided for ccxmMergeIdx, for example, cccm_merge_idx and ccrm_merge_idx, can be omitted.

The following example is a method in which a weighted average is used in combining two CCxM prediction parameters.

$$a[i] = a'[xC + nW - 1][yC - 1][i]$$

Here, w is a weight of the prediction parameter. w may be derived from the weights a'L[i] and a'A[i] of the neighboring blocks L and A, i.e., respective vertical and horizontal sizes (widthA, heightA) and (widthL, heightL) of a'[xC - 1][yC + nH - 1][i] and a'[xC + nW - 1][yC - 1][i], for example.

$$w = ((\text{widthA} + \text{heightA}) << M) / (\text{widthA} + \text{heightA} + \text{widthL} + \text{heightL})$$

M is accuracy for making weight calculation an integer, and for example, M = 6.

ccxmMergeLeftAvailable and ccxmMergeUpperAvailable are respectively flags indicating whether or not the prediction parameter of the left neighboring block and the prediction parameter of the top neighboring block are available (availability). The CCxM prediction unit 313 or another processing unit, for example, the parameter decoder 302, may derive these flags using the following expression. In the following, the position of the neighboring block is represented by (xNbY, yNbY). The position of the target block is represented by (xC, yC).

The CCxM prediction unit 313 sets the position (xC - 1, yC + nH - 1) of the left neighboring block equal to the position (xNbY, yNbY) of the neighboring block, performs the following determinations, and stores determination results in ccxmMergeLeftAvailable. Here, (xC - 1, yC) and (xC - 1, yC + nH) may be used for the position of the left neighboring block.

The CCxM prediction unit 313 sets the position (xC - nW - 1, yC - 1) of the top neighboring block equal to the position (xNbY, yNbY) of the neighboring block, performs the following determinations, and stores determination results in ccxmMergeUpperAvailable. Here, (xC, yC 1) and (xC + nW, yC - 1) may be used for the position of the left neighboring block.

In a case that one or more of the following determinations are true, the CCxM prediction unit 313 considers that there is no neighboring block and sets mergeAvailable equal to false. Otherwise, mergeAvailable is set equal to true.

- The neighboring block is out of a picture.

$$(\text{xNbY} < 0 \text{ or yNbY} < 0 \text{ or xNbY} >= \text{picWidth or yNbY} >= \text{picHeight})$$

- The neighboring block is present in a CTU after the target block.

$$((xNbY >> CtbLog2SizeY) > (xCurr >> CtbLog2SizeY) \,\&\&\, (yNbY >> CtbLog2SizeY) >= (yC >> CtbLog2SizeY)$$

- The neighboring block is present in a CTU after the target block.

$$(yNbY >> CtbLog2SizeY) >= (yC >> CtbLog2SizeY) + 1$$

- The neighboring block is present in a slice different from that of the target block (slice boundary).
- The neighboring block is present in a tile different from that of the target block (tile boundary).
- A synchronous decoding flag is 1 and the neighboring block is a block that is one or more blocks to the right of the target block.

sps_entropy_coding_sync_enabled_flag == 1 && (xNbY >> CtbLog2SizeY) >= (xC >> CtbLog2SizeY) + 1

Here, picWidth and picHeight are picture width and height, and values obtained by decoding syntaxes pps_pic_width_in_luma_samples and pps_pic_height_in_luma_samples of the PPS may be used.

Furthermore, the presence determination may be determined based on a CTU boundary, a sub-picture boundary, or a virtual boundary. The virtual boundary indicates a boundary between a refreshed region and an unrefreshed region.

Furthermore, after the following determination (even in a case that there is a neighboring block), in a case that the following is true, the CCxM prediction unit 313 sets mergeAvailable equal to false.

- The prediction parameter at the position of (xNbY, yNbY) is unavailable.

The "prediction parameter is unavailable" may correspond to the following determination.

- The chroma prediction mode (PredModeC) at (xNbY, yNbY) is intra, and is not CCXM using color component prediction at multiple reference positions.
- PredMode at (xNbY, yNbY) is inter prediction, and is not CCRM using color component prediction at multiple reference positions.

In a case that the size of the neighboring block is sufficiently large, and even in a case that CCXM is actually unused in the neighboring block, CCXM prediction parameter derivation may be internally operated and stored in an internal memory, and the parameter may be used in CCXM merge. In consideration of a case of this table, the following condition may be used.

- The size at (xNbY, yNbY) is smaller than a prescribed size.

For example, nWNb + nHNb < TH, TH = 64, or the like. Here, nWNb and nHNb are the width and the height of the neighboring block.

Furthermore, in a case that the size of the target block is sufficiently small, merge processing may be always performed without using ccxmMergeFlag. For example, in a case that the width is WMAX pixel or less and the height is HMAX pixel or less (for example, WMAX = 4 and HMAX = 4), or in a case that an area is AMAX pixels or less (for example, AMAX = 16), derivation of the prediction parameter may be performed through merge processing. In this case, the syntax elements cccm_merge_flag and ccrm_merge_flag to be provided for ccxmMergeFlag need not be decoded, and this enhances coding efficiency. This can reduce the amount of calculation in prediction parameter derivation in a small block.

Additional Configuration

Furthermore, the CCxM prediction unit 313 may set ccxmMergeLeftAvailable and ccxmMergeUpperAvailable, based on the size of the neighboring block. For example, in a case that the width of the neighboring block (xNbY, yNbY) is a prescribed value (4, 8, 16, or the like) or the width of the target block or more, it may be determined to be unavailable, and mergeAvailable may be set equal to false. Instead of the width of the neighboring block (xNbY, yNbY), the height of the neighboring block, the sum of the width and the height, the area, or the aspect ratio may be used. Alternatively, instead of the width of the target block, the height of the target block, the sum of the width and the height, the area, or the aspect ratio may be used.

The CCxM prediction unit 313 may use ccxmMergeLeftAvailable and ccxmMergeUpperAvailable and the variable ccxmMergeIdx in combination, and may perform the following.

$$a[i] = a'[xC + nW - 1][yC - 1][i]$$

According to this example, ccxmMergeIdx may be decoded only in a case that both of the left neighboring block and the top neighboring block are available, and this can enhance coding efficiency.

In a case that the CCxM prediction filter parameter of the neighboring block is unavailable, the default CCxM prediction filter parameter a_def[] may be used. The case that the CCxM prediction filter parameter of the neighboring block is unavailable corresponds to a case that ccxmMergeLeftAvailable or ccxmMergeUpperAvailable is false. a_def[] is not limited to the neighboring block and a recently used CCxM prediction parameter is used, for example. In this manner, a history of the already derived CCxM prediction filter parameters may be stored in the prediction parameter memory 307 so as to be acquired in order of use, and be used. The CCxM prediction filter parameter may be a fixed value a_const[].

Note that the CCxM prediction filter parameter of the neighboring block is not limited to a directly neighboring block, and the CCxM prediction filter parameter of a non-neighboring block may be used. Such a case is referred to as non-local CCxM merge. Here, the CCxM is a CCCM, a CCRM, a Cross-component prediction model (CCPM), or the like.

The CCxM prediction filter unit 3132 further uses the luma locally decoded image recY, and generates two types of prediction images predC of chroma predCb' and predCr'.

$$predC[x][y] = (\Sigma(a[i] * tempY[i]) + offsetK) >> shiftK \quad (Equation\text{-}Pred)$$

Here, x and y are coordinates in a chroma block, and x = 0, ..., nW - 1 and y = 0, ..., nH - 1. Σ is the sum of i = 0, ..., numCCXM - 1. offsetK = (1 << (shiftK - 1)), and tempY is a temporary variable storing recY. Note that the element of recY may be directly multiplied by a[i], without being stored in tempY. a[i] uses values derived by the CCxM prediction parameter derivation unit 3131 for each of Cb and Cr, and generates two types of prediction images of predCb' and predCr'.

$$tempY[0] = recY[x * SubWidthC + dx0][y * SubHeightC + dy0]$$

$$tempY[1] = recY[x * SubWidthC + dx1][y * SubHeightC + dy1]$$

$$tempY[2] = recY[x * SubWidthC + dx2][y * SubHeightC + dy2]$$

$$tempY[3] = recY[x * SubWidthC + dx3][y * SubHeightC + dy3]$$

$$tempY[4] = recY[x * SubWidthC + dx4][y * SubHeightC + dy4]$$

$$tempY[5] = nonlinear(tempY[0])$$

$$tempY[6] = 1$$

$$nonlinear(x) = x * x + ((1 << (bitDepth - 1)) >> bitDepth)$$

For example, in the above expression, (dx0, dy0), (dx1, dy1), (dx2, dy2), (dx3, dy3), and (dx4, dy4) may be (0, 0), (0, -1), (0, 1), (-1, 0), and (1, 0). This is an example using the target pixel and pixels at top, bottom, left, and right positions of the target pixel for each target pixel of the locally decoded image.

Note that, in (Equation-Pred), the offset term b is also derived as a multiplication with a[numCCXM - 1], but may be derived as the sum of the offset terms as follows.

$$predC[x][y] = (\Sigma(a[i] * tempY[i]) + b + offsetK) >> shiftK$$

Σ is the sum of i = 0, ..., numCCXM - 2, and b = a[numCCXM - 1].

Furthermore, pixels at different positions may be used for each target pixel on the locally decoded image recY,

based on ccxmMultiFltldx. A value obtained by applying a nonlinear function to a pixel value and a coordinate value may be provided as an element of tempY.

$$
\begin{aligned}
&\text{if(ccxmMultiFltIdx == 1) \{} \\
&\quad \text{tempY[0]} = \text{recY[x * SubWidthC + dx0][y * SubHeightC + dy0]} \\
&\quad \text{tempY[1]} = \text{recY[x * SubWidthC + dx1][y * SubHeightC + dy1]} \\
&\quad \text{tempY[2]} = \text{recY[x * SubWidthC + dx2][y * SubHeightC + dy2]} \\
&\quad \text{tempY[3]} = \text{recY[x * SubWidthC + dx3][y * SubHeightC + dy3]} \\
&\quad \text{tempY[4]} = \text{nonlinear(tempY[0])} \\
&\quad \text{tempY[5]} = \text{nonlinear(tempY[1])} \\
&\quad \text{tempY[6]} = \text{nonlinear(tempY[2])} \\
&\quad \text{tempY[7]} = x \\
&\quad \text{tempY[8]} = y \\
&\quad \text{tempY[9]} = 1 \\
&\quad \text{numCCXM} = 10 \\
&\}
\end{aligned}
$$

For example, in the above expression, (dx0, dy0), (dx1, dy1), (dx2, dy2), and (dx3, dy3) may be (0, 0), (-1, 0), (1, 0), and (0, 1). This is an example using the target pixel and pixels at left, right, and top positions of the target pixel for each target pixel.

The following else-if clause is an example of a case that ccxmMultiFltldx is 2.

$$
\begin{aligned}
&\text{else if(ccxmMultiFltIdx == 2) \{} \\
&\quad \text{tempY[0]} = \text{recY[x * SubWidthC + dx0][y * SubHeightC + dy0]} \\
&\quad \text{tempY[1]} = \text{recY[x * SubWidthC + dx1][y * SubHeightC + dy1]} \\
&\quad \text{tempY[2]} = \text{recY[x * SubWidthC + dx2][y * SubHeightC + dy2]} \\
&\quad \text{tempY[3]} = \text{recY[x * SubWidthC + dx3][y * SubHeightC + dy3]} \\
&\quad \text{tempY[4]} = \text{recY[x * SubWidthC + dx4][y * SubHeightC + dy4]} \\
&\quad \text{tempY[5]} = \text{recY[x * SubWidthC + dx5][y * SubHeightC + dy5]} \\
&\quad \text{tempY[6]} = \text{nonlinear(tempY[0])} \\
&\quad \text{tempY[7]} = \text{nonlinear(tempY[1])} \\
&\quad \text{tempY[8]} = \text{nonlinear(tempY[2])} \\
&\quad \text{tempY[9]} = x \\
&\quad \text{tempY[10]} = 1 \\
&\quad \text{numCCXM} = 11
\end{aligned}
$$

```
        }
```

For example, in the above expression, (dx0, dy0), (dx1, dy1), (dx2, dy2), (dx3, dy3), (dx4, dy4), and (dx5, dy5) may be (0, 0), (-1, 0), (1, 0), (0, -1), (-1, -1), and (1, -1). This is an example using the target pixel and pixels at left, right, top, top left, and top right positions of the target pixel as the locally decoded image.

The following else-if clause is an example of a case that ccxmMultiFltIdx is 3.

```
        else if(ccxmMultiFltIdx == 3) {
        tempY[0] = recY0[x * SubWidthC + dx0][y * SubHeightC + dy0]
        tempY[1] = recY0[x * SubWidthC + dx1][y * SubHeightC + dy1]
        tempY[2] = recY0[x * SubWidthC + dx2][y * SubHeightC + dy2]
        tempY[3] = recY1[x * SubWidthC + dx3][y * SubHeightC + dy3]
        tempY[4] = recY1[x * SubWidthC + dx4][y * SubHeightC + dy4]
        tempY[5] = recY1[x * SubWidthC + dx5][y * SubHeightC + dy5]
        tempY[6] = nonlinear(tempY[0])
        tempY[7] = nonlinear(tempY[1])
        tempY[8] = nonlinear(tempY[2])
        tempY[9] = y
        tempY[10] = 1
        numCCXM = 11
        }
```

For example, in the above expression, (dx0, dy0), (dx1, dy1), (dx2, dy2), (dx3, dy3), (dx4, dy4), and (dx5, dy5) may be (0, 0), (1, -1), (-1, 1), (0, 0), (1, -1), and (-1, 1). The reference pixel filter unit 3133 applies different filters to recY, and derives recY0 and recY1. This is an example using two sets of, with changed filters, the target pixel and pixels at top right and bottom left positions of the target pixel as the locally decoded image.

Note that the CCxM prediction unit may downsample recY into an image recYs having the same size as the chroma images of the target block by using the reference pixel filter 3133 and use recY. In this case, the following is an example of a case that ccxmMultiFltIdx is 1.

```
        if(ccxmMultiFltIdx == 1) {
        tempY[0] = recYs[x + dx0][y + dy0]
        tempY[1] = recYs[x + dx1][y + dy1]
        tempY[2] = recYs[x + dx2][y + dy2]
```

$$\text{tempY}[3] = \text{recYs}[x + dx3][y + dy3]$$

$$\text{tempY}[4] = \text{nonlinear}(\text{tempY}[0])$$

$$\text{tempY}[5] = \text{nonlinear}(\text{tempY}[1])$$

$$\text{tempY}[6] = \text{nonlinear}(\text{tempY}[2])$$

$$\text{tempY}[7] = x$$

$$\text{tempY}[8] = y$$

$$\text{tempY}[9] = 1$$

$$\text{numCCXM} = 10$$

}

Also in a case that ccxmMultiFltIdx has another value, similarly, conversion of coordinates using SubWidthC and SubHeightC is unnecessary.

Configuration of Intra Prediction Parameter Derivation Unit

The intra prediction parameter derivation unit 304 decodes an intra prediction parameter, for example, an intra prediction mode IntraPredMode, with reference to the prediction parameters stored in the prediction parameter memory 307 based on codes input from the entropy decoder 301. The intra prediction parameter derivation unit 304 outputs the decoded intra prediction parameter to the prediction image generation unit 308, and stores the decoded intra prediction parameter in the prediction parameter memory 307. The intra prediction parameter derivation unit 304 may derive different intra prediction modes between luma and chroma.

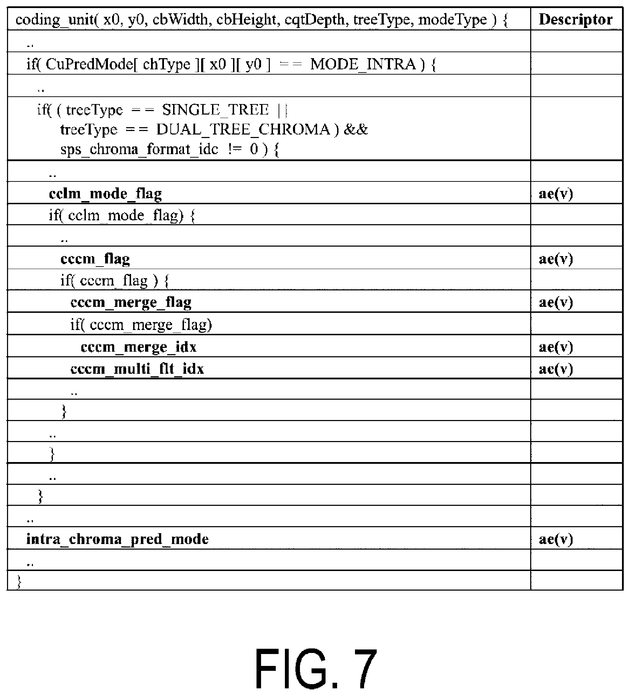

FIG. 7 illustrates a syntax configuration of the intra prediction parameter according to an embodiment of the present invention. As illustrated in the figure, the intra prediction parameter derivation unit 304 decodes cclm_mode_flag indicating whether or not to perform LM prediction for predicting chrominance from luminance. In a case that cclm_mode_flag is a value (here, 1) indicating that LM prediction is performed, the flag cccm_flag indicating whether or not to perform CCCM prediction for predicting chrominance by performing a convolution operation on multiple luma values is decoded. In a case that cccm_flag is true, cccm_merge_flag and cccm_multi_flt_idx are decoded. cccm_merge_flag is a flag indicating whether or not the CCCM prediction unit 31044 uses merge prediction. cccm_multi_flt_idx is an index for selecting a filtering method for a reference pixel in CCCM prediction. For example, it may be a syntax for switching the functions of multiple reference pixels around the target pixel and the weight coefficients, and switch the positions of the reference pixels. It may switch presence or absence of a coordinate input and the number of second-degree terms.

In a case that cccm_merge_flag indicates that merge prediction is used (here, 1), cccm_merge_idx is decoded. cccm_merge_idx is a parameter indicating a reference block used for merge prediction.

Note that, as another unillustrated configuration, the CCCM prediction unit 31044 may be configured to decode cccm_multi_flt_idx according to cccm_merge_flag. Specifically, only in a case that cccm_merge_flag is false, cccm_multi_flt_idx may be decoded. In a case that cccm_multi_flt_idx does not appear, a specific value, for example, 0, may be used as cccm_multi_flt_idx. In a case that cccm_merge_flag is true, the value of cccm_multi_flt_idx may also be predicted from a repair neighboring block. For example, in a case that a label of the neighboring block is represented by N, and a variable having N as a suffix represents the variable in the neighboring block N, cccm_multi_flt_idxN being cccm_multi_flt_idx of the neighboring block N may be used as cccm_multi_flt_idx.

cccm_multi_flt_idx = cccm_multi_flt_idxN

(Color Component Prediction)

In color component (cross color component) prediction, modeling is performed using correlation of pixel values between color components, a prediction parameter is derived, filtering to which the prediction parameter is applied is performed, and an image of another color component is derived from an image of a certain color component. In the present embodiment, some color component predictions as illustrated in the following may be used for a chroma block.

CCLM Prediction

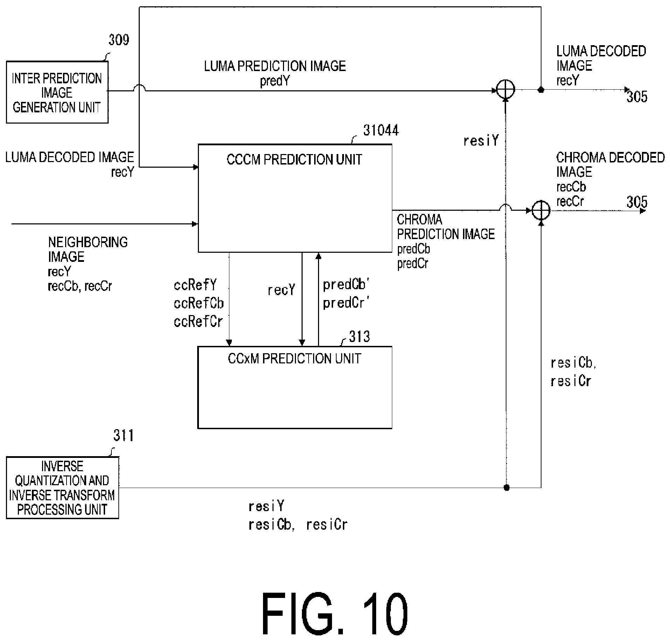

As illustrated in FIG. 10, the CCCM prediction unit 31044 performs CCLM prediction and CCCM prediction by using the CCxM prediction unit. The CCLM prediction is prediction using a simpler linear model than the CCCM prediction.

The CCCM prediction unit 31044 operates as follows, based on the values of cclm_mode_flag and cccm_flag.

CCCM Prediction

In a case that cclm_mode_flag is true (1) and cccm_flag is true (1), the CCCM prediction unit 31044 performs CCCM prediction. In a case that cccm_flag is true, the intra prediction parameter derivation unit 304 may further decode cccm_merge_flag. The CCCM prediction unit 31044 generates the prediction images of chroma predCb and predCr from the luma locally decoded image recY by using the CCxM prediction unit 313. Specifically, the following is performed.

In a case that cccm_merge_flag is false, the CCCM prediction unit 31044 sets the reference images ccRefY, ccRefCb, and ccRefCr as follows by using the locally decoded images recY, recCb, and recCr of a neighboring region (including the left, top, and top right of the target block, for example), and provides the reference images to the CCxM prediction unit.

    ccRefY = recY
    ccRefCb = recCb
    ccRefCr = recCr

The CCxM prediction unit 313 derives the CCxM prediction parameter, based on the provided reference images.

In a case that cccm_merge_flag is true, the CCCM prediction unit 31044 may provide ccxmMergeIdx = cccm_merge_idx to the CCxM prediction unit 313 by using the syntax element cccm_merge_idx for selecting the filter parameter used for merging, and cause derivation of the prediction parameter through merge processing. This allows omission of processing of deriving the prediction parameter from pixel values using a linear operation, and produces an effect of reducing the amount of calculation.

Next, the luma locally decoded image recY of the target block is input to the CCxM prediction unit 313, the chroma prediction images predCb and predCr are derived by applying a model having the derived CCxM prediction parameter, and the chroma prediction images are output to the addition unit.

CCLM Prediction

In a case that cclm_mode_flag is true (1) and cccm_flag is false (0), the CCCM prediction unit 31044 performs CCLM prediction. The CCCM prediction unit 31044 generates the prediction images of chroma predCb and predCr from the luma locally decoded image recY by using the CCxM prediction unit 313. Specifically, the CCxM prediction parameter derivation unit 3131 derives the CCCM prediction parameter including a[k] and k = 0, ..., numCCLM - 1 by using the luma reference pixel ccRefY and the chroma reference pixel ccRefC adjacent to the target block. numCCLM - 1 is 2, for example. The CCxM prediction parameter in this case is referred to as a CCLM prediction parameter.

Block Size Restriction

In a case that the size of the target block is a prescribed size or less (or the size of the target block is equal to a prescribed minimum size), the intra prediction parameter derivation unit 304 may use CCCM merge that always uses an already derived CCCM parameter as it is. Specifically, in a case that the target block is the prescribed size or less, and cccm_flag == 1, the intra prediction parameter derivation unit 304 may infer 1 without decoding cccm_merge_flag from coded data. This allows use of a derived CCCM parameter, and the CCxM prediction unit 313 can omit parameter derivation processing.

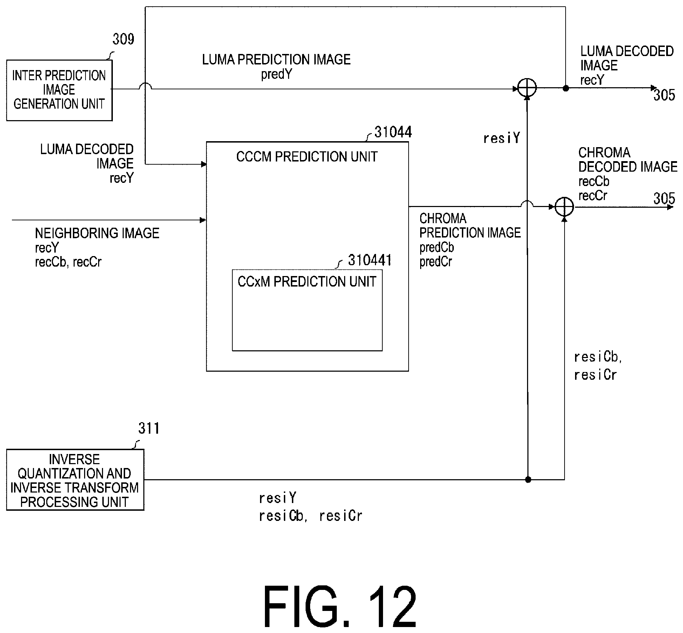

As illustrated in FIG. 12, the CCCM processing unit 31044 may be configured to include a CCxM prediction unit 310441. The CCxM prediction unit 310441 is the same as the CCxM prediction unit 313 already described, and thus description thereof will be omitted.

Configuration of Inter Prediction Parameter Derivation Unit

As illustrated in FIG. 4, the inter prediction parameter derivation unit 303 derives an inter prediction parameter with reference to the prediction parameters stored in the prediction parameter memory 307 based on the syntax element input from the parameter decoder 302. The inter prediction parameter is output to the inter prediction image generation unit 309 and the prediction parameter memory 307. Since the inter prediction parameter derivation unit 303 and an AMVP prediction parameter derivation unit 3032, a merge prediction parameter derivation unit 3036, an MMVD prediction unit 30376, and an MV addition unit 3038 serving as internal elements of the inter prediction parameter derivation unit 303 are means common to the video coding apparatus and the video decoding apparatus, they may be collectively referred to as a motion vector derivation unit (motion vector derivation apparatus).

In a case that general_merge_flag indicates 1, that is, the merge prediction mode, merge_idx is derived and output to the merge prediction parameter derivation unit 3036.

In a case that general_merge_flag indicates 0, that is, the AMVP prediction mode, the AMVP prediction parameter derivation unit 3032 derives mvpLX from inter_pred_idc, refIdxLX, or mvp_LX_idx.

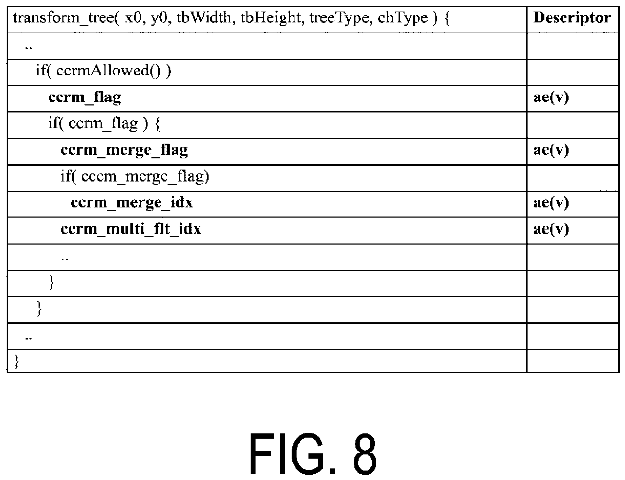

FIG. 8 illustrates a syntax configuration of the inter prediction parameter according to an embodiment of the present invention. As illustrated in the figure, in a case that ccrmAllowed() being true (here, 1) is returned in the target block, the inter prediction parameter derivation unit 303 decodes ccrm_flag indicating whether or not to perform CCRM prediction. Here, the function ccrmAllowed() is a function for determining whether or not CCRM prediction can be performed. For example, true is returned in a case that all of the following are satisfied: the target block is an inter prediction block, an Intra Block Copy (IBC) mode is unused in the target block, the number of chroma pixels of the target block is less than a prescribed value (for example, 16), and the transform coefficient of the luma image in the target block is non-zero. Furthermore, in a case that ccrm_flag is true, the inter prediction parameter derivation unit 303 decodes ccrm_merge_flag and ccrm_multi_flt_idx. ccrm_merge_flag indicates whether or not to derive the prediction parameter through merging. ccrm_multi_flt_idx is an index for selecting a filtering method for a reference pixel.

MV Addition Unit

The MV addition unit 3038 adds derived mvpLX and mvdLX together to derive mvLX.

Merge Prediction

The merge prediction parameter derivation unit 3036 derives merge candidates including the prediction parameters (predFlagLX, mvLX, refIdxLX), and configures a merge candidate list. Furthermore, the merge prediction parameter derivation unit 3036 selects motion information (mvLXN[0], mvLXN[1]), predFlagLXN, and refIdxLXN of a merge candidate N indicated by merge_idx out of the merge candidates included in the merge candidate list as the inter prediction parameters of the target block. The merge prediction parameter derivation unit 3036 stores the selected inter prediction parameters of the merge candidate in the prediction parameter memory 307 and outputs the selected inter prediction parameters to the inter prediction image generation unit 309.

Inter Prediction Image Generation Unit 309

In a case that predMode indicates the inter prediction, the inter prediction image generation unit 309 generates a prediction image of a block or a subblock through the inter prediction by using the inter prediction parameters input from the inter prediction parameter derivation unit 303 and the reference picture.

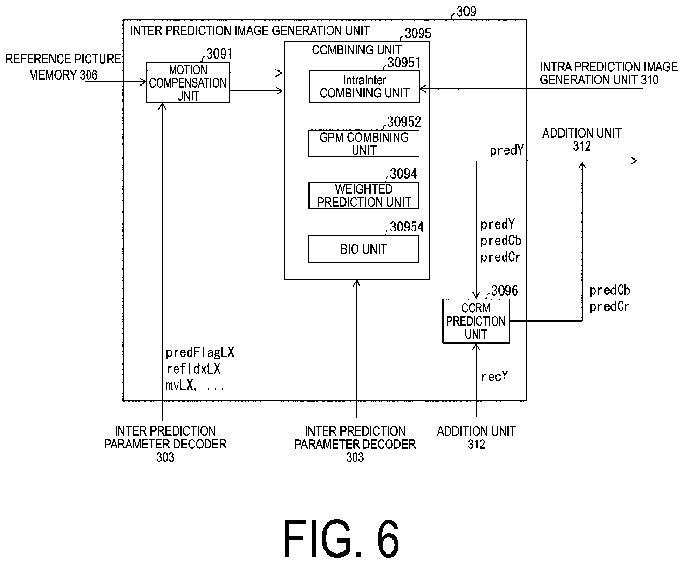

FIG. 6 is a schematic diagram illustrating a configuration of the inter prediction image generation unit 309 included in the prediction image generation unit 308 according to the present embodiment. The inter prediction image generation unit 309 includes a motion compensation unit (prediction image generation apparatus) 3091, an OOB processing unit 3092, and a combining unit 3095. The combining unit 3095 includes a weighted prediction unit 3094.

Motion Compensation

The motion compensation unit 3091 (interpolation image generation unit 3091) generates an interpolation image (motion compensation image) by reading a reference block from the reference picture memory 306 based on the inter prediction parameters (predFlagLX, refIdxLX, and mvLX) input from the inter prediction parameter derivation unit 303. The reference block is a block located on the reference picture RefPicLX indicated by refIdxLX, at a position shifted by mvLX from the position of the target block. Here, in a case that mvLX does not have an integer precision, an interpolation image is generated by using a filter referred to as a motion compensation filter for generating pixels at the fractional positions.

The motion compensation unit 3091 derives top left coordinates (xPb, yPb) of a block having a size of bW * bH, coordinates (xL, yL) in a prediction block, and an integer position (xInt, yInt) and a phase (xFrac, yFrac) corresponding to a motion vector (mvLX[0], mvLX[1]), using the following expression (MC-P1).

$$xInt = xPb + (mvLX[0] >> (log2MVPREC)) + xL$$

$$xFrac = mvLX[0]\&(MVPREC - 1)$$

$$yInt = yPb + (mvLX[1] >> (log2MVPREC)) + yL$$

$$yFrac = mvLX[1]\&(MVPREC - 1)$$

Here, MVPREC indicates accuracy of mvLX (1/MVPREC pixel accuracy), log2MVPREC = log2(MVPREC), x = 0, ..., bW - 1, and y = 0, ..., bH - 1. For example, MVPREC may be equal to 16.

The motion compensation unit 3091 derives a temporary image temp[][] by performing horizontal interpolation processing on reference pictures refY, refCb, and refCr using an interpolation filter. In the expression below, $\Sigma$ is the sum related to k of k = 0, ..., NTAP - 1, mcFilter[Frac][k] is a k-th interpolation filter coefficient in the phase Frac, shift1 is a normalization parameter for adjusting a value range, and offset1 = 1 << (shift1 - 1).

$$temp[x][y] = (\Sigma mcFilter[xFrac][k] * ref[xInt + k\text{-}NTAP/2 + 1][yInt] + offset1) >> shift1$$

Subsequently, the motion compensation unit 3091 derives an interpolation image Pred[][] by performing vertical interpolation processing on the temporary image temp[][]. In the expression below, $\Sigma$ is the sum related to k of k = 0, ..., NTAP - 1, shift2 is a normalization parameter for adjusting a value range, and offset2 = 1 << (shift - 1).

$$Pred[x][y] = (\Sigma(mcFilter[yFrac][k] * temp[x][y + k\text{-}NTAP/2 + 1]) + offset2) >> shift2$$

(Expression MC-1)

Weighted Prediction

The weighted prediction unit 3094 generates a prediction image of a block by multiplying an interpolation image PredLX by a weight coefficient.

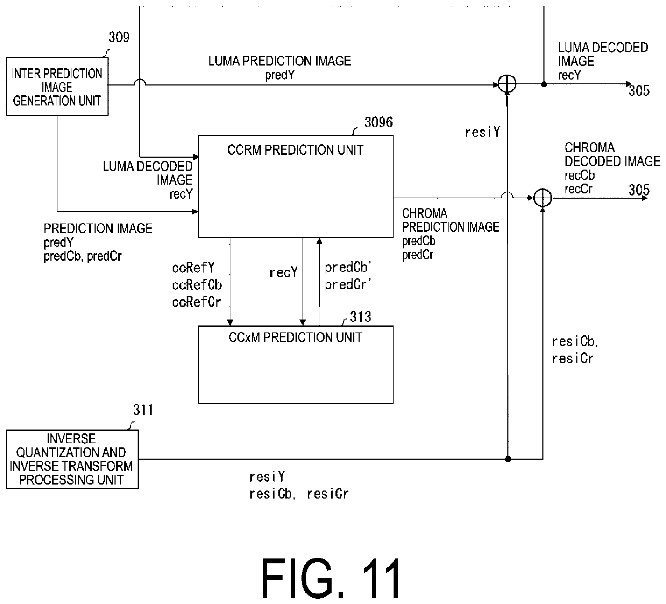

As illustrated in FIG. 11, the CCRM prediction unit 3096 performs CCRM prediction by using the CCxM prediction unit. In a case that ccrm_flag is true, the CCRM prediction unit performs the following processing in units of TU blocks. In a case that ccrm_merge_flag is false, the CCRM prediction unit 3096 generates the chroma prediction images predCb and predCr from the luma locally decoded image recY by using the CCxM prediction unit 313. Specifically, the reference images ccRefY, ccRefCb, and ccRefCr are set as follows by using the prediction images predY, predCb, and predCr of the target block, and are provided to the CCxM prediction unit 313.

    ccRefY = predY
    ccRefCb = predCb
    ccRefCr = predCr

The CCxM prediction unit 313 derives the CCxM prediction parameter, based on the provided reference images.

In a case that ccrm_merge_flag is true, the CCRM prediction unit 3096 may provide ccxmMergeIdx = ccrm_merge_idx to the CCxM prediction unit 313 by using the syntax element ccrm_merge_idx for selecting the filter parameter used for merging, and cause derivation of the CCxM prediction parameter through merge processing. This allows omission of processing of deriving the prediction parameter from pixel values using a linear operation, and produces an effect of reducing the amount of calculation.

Next, the luma decoded image recY of the target block is input to the CCxM prediction unit 313, new chroma prediction images predCb and predCr are derived by applying a model having the derived CCxM prediction parameter, and the new chroma prediction images are output to the addition unit.

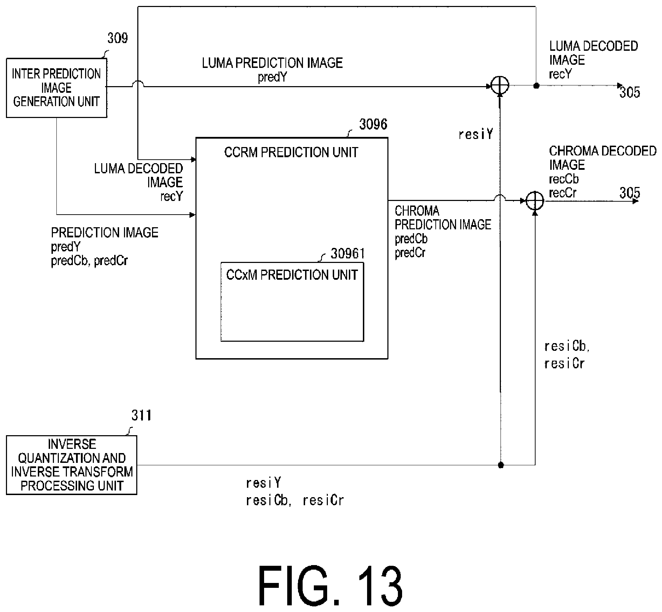

As illustrated in FIG. 13, the CCRM prediction unit 3096 may be configured to include a CCxM prediction unit 30961. The CCxM prediction unit 30961 is the same as the CCxM prediction unit 313 already described, and thus description thereof will be omitted.

As described above, the CCRM prediction unit derives the chroma prediction images from the luma locally decoded image. The chroma prediction images predCb and predCr generated from the luma locally decoded image recY as described above are images closer to the source image, and this can reduce residuals and enhance coding efficiency.

The inverse quantization and inverse transform processing unit 311 performs inverse quantization on a quantized transform coefficient input from the entropy decoder 301 to calculate a transform coefficient. This quantized transform coefficient is a coefficient obtained by performing, in coding processing, a frequency transform such as a Discrete Cosine Transform (DCT) or a Discrete Sine Transform (DST) on prediction errors for quantization. The inverse quantization and inverse transform processing unit 311 performs an inverse frequency transform such as an inverse DCT or an inverse DST on the transform coefficient to calculate a prediction error. The inverse quantization and inverse transform processing unit 311 outputs the prediction error to the addition unit 312.

The inverse quantization and inverse transform processing unit 311 includes a scaling unit 31111, an inverse non-separable transform processing unit 31121, and an inverse separable transform processing unit 31123.

The addition unit 312 adds the prediction image of the block input from the prediction image generation unit 308 and the prediction error input from the inverse quantization and inverse transform processing unit 311 for each pixel, and generates a decoded image of the block. The addition unit 312 stores the decoded image of the block in the reference picture memory 306, and also outputs it to the loop filter 305.

Configuration of Video Coding Apparatus

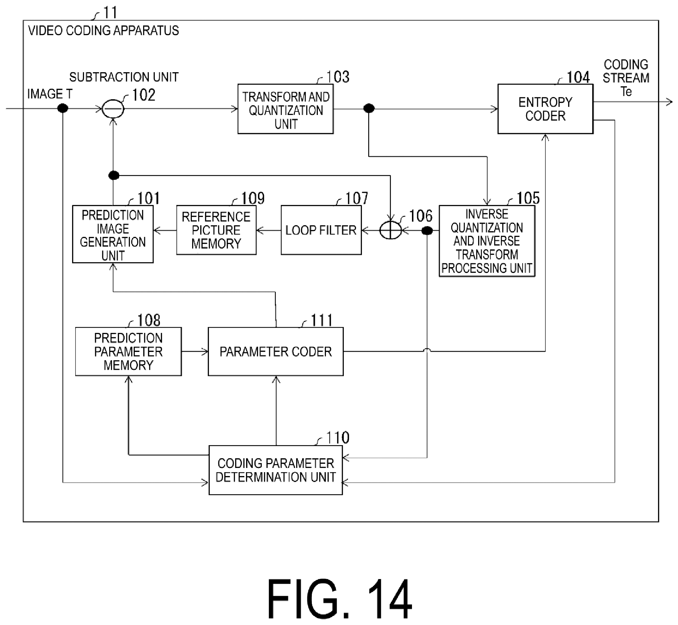

Next, a configuration of the video coding apparatus 11 according to the present embodiment will be described. FIG. 14 is a block diagram illustrating a configuration of the video coding apparatus 11 according to the present embodiment. The video coding apparatus 11 includes a prediction image generation unit 101, a subtraction unit 102, a transform and quantization unit 103, an inverse quantization and inverse transform processing unit 105, an addition unit 106, a loop filter 107, a prediction parameter memory (a prediction parameter storage unit or a frame memory) 108, a reference picture memory (a reference image storage unit or a frame memory) 109, a coding parameter determination unit 110, a parameter coder 111, and an entropy coder 104.

The prediction image generation unit 101 generates a prediction image for each CU that is a region obtained by splitting each picture of an image T. The operation of the prediction image generation unit 101 is the same as that of the prediction image generation unit 308 already described, and description thereof will be omitted.

The subtraction unit 102 subtracts a pixel value of the prediction image of a block input from the prediction image generation unit 101 from a pixel value of an image T to generate a prediction error. The subtraction unit 102 outputs the prediction error to the transform and quantization unit 103.

The transform and quantization unit 103 performs a frequency transform on the prediction error input from the subtraction unit 102 to calculate a transform coefficient, and derives a quantized transform coefficient by quantization. The transform and quantization unit 103 outputs the quantized transform coefficient to the entropy coder 104 and the inverse quantization and inverse transform processing unit 105.

The inverse quantization and inverse transform processing unit 105 is the same as the inverse quantization and inverse transform processing unit 311 of the video decoding apparatus 31, and descriptions thereof are omitted. The calculated prediction error is output to the addition unit 106.

The entropy coder 104 receives input of the quantized transform coefficient from the transform and quantization unit 103, and input of coding parameters from the parameter coder 111. The entropy coder 104 performs entropy coding on the split information, the prediction parameters, the quantized transform coefficient, and the like to generate and output a coding stream Te.

The parameter coder 111 includes a header coder 1110, a CT information coder 1111, a CU coder 1112 (prediction mode coder), an inter prediction parameter coder 112, and an intra prediction parameter coder 113 that are not illustrated. The CU coder 1112 further includes a TU coder 1114.

The inter prediction parameter coder 112 includes a parameter coding controller 1121 and an inter prediction parameter derivation unit 303. The inter prediction parameter derivation unit 303 has a configuration common to the video decoding apparatus. The parameter coding controller 1121 includes a merge index derivation unit 11211 and a vector candidate index derivation unit 11212.

The merge index derivation unit 11211 derives merge candidates and the like, and outputs the merge candidates and the like to the inter prediction parameter derivation unit 303. The vector candidate index derivation unit 11212 derives prediction vector candidates and the like, and outputs the prediction vector candidates and the like to the inter prediction parameter derivation unit 303 and the parameter coder 111.

The intra prediction parameter coder 113 codes IntraPredMode and the like input from the coding parameter determination unit 110. The intra prediction parameter coder 113 includes a partly identical configuration to a configuration in which the parameter decoder 302 derives the intra prediction parameters.

The addition unit 106 adds a pixel value of the prediction image of the block input from the prediction image generation unit 101 and the prediction error input from the inverse quantization and inverse transform processing unit 105 for each pixel to generate a decoded image. The addition unit 106 stores the generated decoded image in the reference picture memory 109.

The loop filter 107 applies a deblocking filter, an SAO, and an ALF to the decoded image generated by the addition unit 106. Note that the loop filter 107 need not necessarily include the above-described three types of filters, and may include only a deblocking filter, for example.

The prediction parameter memory 108 stores the prediction parameters generated by the coding parameter determination unit 110 at a predetermined position for each target picture and CU.

The reference picture memory 109 stores the decoded image generated by the loop filter 107 at a predetermined position for each target picture and CU.

The coding parameter determination unit 110 selects one set among multiple sets of coding parameters. The coding parameters include QT, BT, or TT split information described above, a prediction parameter, or a parameter to be coded which is generated in relation to the aforementioned elements. The prediction image generation unit 101 generates a prediction image by using these coding parameters.

The coding parameter determination unit 110 calculates an RD cost value indicating the magnitude of an amount of information and a coding error for each of the multiple sets. The coding parameter determination unit 110 selects a set of coding parameters of which the calculated cost value is a minimum value. In this manner, the entropy coder 104 outputs a selected set of coding parameters as a coding stream Te. The coding parameter determination unit 110 stores the determined coding parameters in the prediction parameter memory 108.

Note that some of the video coding apparatus 11 and the video decoding apparatus 31 in the above-described embodiments may implement, with a computer, for example, the entropy decoder 301, the parameter decoder 302, the loop filter 305, the prediction image generation unit 308, the inverse quantization and inverse transform processing unit 311, the addition unit 312, the prediction image generation unit 101, the subtraction unit 102, the transform and quantization unit 103, the entropy coder 104, the inverse quantization and inverse transform processing unit 105, the loop filter 107, the coding parameter determination unit 110, and the parameter coder 111. In that case, this configuration may be realized by recording a program for realizing such control functions on a computer-readable recording medium and causing a computer system to read and perform the program recorded on the recording medium. Note that the "computer system" described here refers to a computer system built into either the video coding apparatus 11 or the video decoding apparatus 31 and is assumed to include an OS and hardware components such as a peripheral apparatus. The "computer-readable recording medium" refers to a portable medium such as a flexible disk, a magneto-optical disk, a ROM, and a CD-ROM, and a storage apparatus such as a hard disk built into the computer system. Moreover, the "computer-readable recording medium" may include a medium that dynamically retains the program for a short period of time, such as a communication wire that is used to transmit the program over a network such as the Internet or over a communication line such as a telephone line, and a medium that retains the program for a certain period of time, such as a volatile memory within the computer system which functions as a server or a client in a case that the program is transmitted via the communication wire. The aforementioned program may be configured to implement part of the functions described above, and also may be configured to be capable of implementing the functions described above in combination with a program already recorded in the computer system.

Some or all of the video coding apparatus 11 and the video decoding apparatus 31 in the embodiment described above may be realized as integrated circuits such as a large-scale integration (LSI). Each function block of the video coding apparatus 11 and the video decoding apparatus 31 may be individually realized as processors, or some or all thereof may be integrated into processors. The circuit integration technique is not limited to LSI, and may be realized as dedicated circuits or a multi-purpose processor. In a case that advances in the semiconductor technology lead to the advent of a circuit integration technology that replaces LSI, an integrated circuit based on the technology may be used.

Although an embodiment of the present invention has been described above in detail with reference to the drawings, the specific configurations thereof are not limited to those described above and various design changes or the like can be made without departing from the spirit of the invention.

A video decoding apparatus according to aspect 1 of the present invention includes: a prediction parameter derivation unit configured to derive a cross color component prediction parameter; and a prediction filter unit configured to apply a cross color component prediction model using a derived prediction parameter to an input image and generate an output image, wherein a prediction parameter is derived by using the prediction parameter of a neighboring region, and the output image is generated from the input image.

In above aspect 1, in the video decoding apparatus according to aspect 2 of the present invention, the prediction parameter derivation unit derives the prediction parameter of a convolution operation model for expressing transform processing from a luma locally decoded image of the neighboring region into a chroma locally decoded image of the neighboring region by using the prediction parameter of the neighboring region, and the prediction filter unit applies the model to the luma locally decoded image of a target block and generates a local chroma prediction image of the target block.

In above aspect 1, in the video decoding apparatus according to aspect 3 of the present invention, the prediction parameter derivation unit derives the prediction parameter of a convolution operation model for expressing transform processing from a local luma prediction image of a target block into a local chroma prediction image of the target block by using the prediction parameter of the neighboring region, and the prediction filter unit applies the model to a luma locally decoded image of the target block and generates a local chroma prediction image of the target block.

In above aspect 1, in the video decoding apparatus according to aspect 4 of the present invention, the prediction parameter derivation unit derives the prediction parameter by selecting the prediction parameters of multiple neighboring regions, based on a decoded index.

In above aspect 1, in the video decoding apparatus according to aspect 5 of the present invention, the prediction parameter derivation unit derives the prediction parameter by combining the prediction parameters of multiple neighboring regions, using a weighted sum.

In above aspect 5, in the video decoding apparatus according to aspect 6 of the present invention, the prediction parameter derivation unit derives the weight based on a ratio between a sum of a width and a height of a target region and the sum of the width and the height of the neighboring region.

In above aspect 1, in the video decoding apparatus according to aspect 7 of the present invention, the prediction parameter derivation unit derives availability of the prediction parameter of the neighboring region, based on an attribute of the neighboring region, and derives the prediction parameter by using the prediction parameter of the neighboring region being available.

In above aspect 7, in the video decoding apparatus according to aspect 8 of the present invention, the prediction parameter derivation unit derives availability of the prediction parameter of the neighboring region, based on a width and a height of the neighboring region.

In above aspect 7, in the video decoding apparatus according to aspect 9 of the present invention, the prediction parameter derivation unit derives availability of the prediction parameter of the neighboring region, based on a positional relationship between the neighboring region and a target region.

A video coding apparatus according to aspect 10 of the present invention includes the prediction parameter derivation apparatus according to above aspects 1 to 9, wherein the video coding apparatus codes a residual between a prediction image generated by applying the cross color component prediction model represented by the prediction parameter to a local image and a coding target image.

Industrial Applicability

The embodiments of the present invention can be preferably applied to a video decoding apparatus for decoding coded data in which image data is coded, and a video coding apparatus for generating coded data in which image data is coded. The embodiments of the present invention can be preferably applied to a data structure of coded data generated by the video coding apparatus and referred to by the video decoding apparatus.

**Claims**

1.  A video decoding apparatus, comprising:

    a prediction parameter derivation unit configured to derive a cross color component prediction parameter; and
    a prediction filter unit configured to apply a cross color component prediction model to an input image by using the cross color component prediction parameter and generate an output image, wherein
    the prediction parameter derivation unit includes
    a case of deriving the cross color component prediction parameter of a target block by using a prediction parameter of a neighboring region, and
    a case of deriving the cross color component prediction parameter of the target block from a luma decoded image of the neighboring region and a chroma decoded image of the neighboring region or a luma prediction image of the target block and a chroma prediction image of the target block, and
    the prediction filter unit generates the chroma prediction image of the target block by using the derived cross color component prediction parameter of the target block.

2.  The video decoding apparatus according to claim 1, wherein
    the video decoding apparatus decodes a merge flag indicating whether or not to perform merge prediction using the prediction parameter of the neighboring region, and in a case that the merge flag is true, derives the cross color component prediction parameter of the target block by using the prediction parameter of the neighboring region, otherwise derives the cross color component prediction parameter of the target block from the luma decoded image of the neighboring region and the chroma decoded image of the neighboring region or the luma prediction image of the target block and the chroma prediction image of the target block.

3.  The video decoding apparatus according to claim 1, wherein
    the prediction parameter derivation unit selects a model to be applied to the luma decoded image of the target block, based on a decoded index.

4. The video decoding apparatus according to claim 1, wherein
the prediction parameter derivation unit derives the prediction parameter by combining the prediction parameters of multiple neighboring regions, using a weighted sum.

5. The video decoding apparatus according to claim 1, wherein
the prediction parameter derivation unit derives a weight based on a ratio between a sum of a width and a height of a target region and the sum of the width and the height of the neighboring region.

6. The video decoding apparatus according to claim 1, wherein
the prediction parameter derivation unit derives availability of the prediction parameter of the neighboring region, based on an attribute of the neighboring region, and derives the prediction parameter by using the prediction parameter of the neighboring region being available.

7. The video decoding apparatus according to claim 1, wherein
the prediction parameter derivation unit derives availability of the prediction parameter of the neighboring region, based on a width and a height of the neighboring region.

8. The video decoding apparatus according to claim 1, wherein
the prediction parameter derivation unit derives availability of the prediction parameter of the neighboring region, based on a positional relationship between the neighboring region and a target region.

9. The video decoding apparatus according to claim 2, wherein
the video decoding apparatus decodes a flag indicating whether or not to use cross color component prediction, and in a case that the flag is true, decodes the merge flag indicating whether or not to perform the merge prediction using the prediction parameter of the neighboring region.

10. The video decoding apparatus according to claim 9, wherein
in a case that the merge flag is false, the video decoding apparatus decodes an index for selecting a filtering method for a reference pixel.

11. A video coding apparatus, comprising

the prediction parameter derivation unit according to claim 1, wherein
the video coding apparatus codes a residual between a prediction image generated by applying the cross color component prediction model represented by the prediction parameter to a local image and a coding target image.

**FIG. 1**

FIG. 2

FIG. 3

VIDEO DECODING APPARATUS ⌐31

CODING
STREAM Te → ENTROPY DECODER ⌐301 → INVERSE QUANTIZATION AND INVERSE TRANSFORM PROCESSING UNIT ⌐311 → ADDITION UNIT ⊕ ⌐312 → LOOP FILTER ⌐305 → DECODED IMAGE Td

PARAMETER DECODER ⌐302
- INTER PREDICTION PARAMETER DERIVATION UNIT ⌐303
- INTRA PREDICTION PARAMETER DERIVATION UNIT ⌐304

PREDICTION IMAGE GENERATION UNIT ⌐308
- INTER PREDICTION IMAGE GENERATION UNIT ⌐309
- INTRA PREDICTION IMAGE GENERATION UNIT ⌐310

PREDICTION PARAMETER MEMORY ⌐307

REFERENCE PICTURE MEMORY ⌐306

# FIG. 4

## FIG. 5

FIG. 6

| coding_unit( x0, y0, cbWidth, cbHeight, cqtDepth, treeType, modeType ) { | Descriptor |
|---|---|
| .. | |
| if( CuPredMode[ chType ][ x0 ][ y0 ] = = MODE_INTRA ) { | |
| .. | |
| if( ( treeType = = SINGLE_TREE \|\| <br>     treeType = = DUAL_TREE_CHROMA ) && <br>     sps_chroma_format_idc != 0 ) { | |
| .. | |
| cclm_mode_flag | ae(v) |
| if( cclm_mode_flag) { | |
| .. | |
| cccm_flag | ae(v) |
| if( cccm_flag ) { | |
| cccm_merge_flag | ae(v) |
| if( cccm_merge_flag) | |
| cccm_merge_idx | ae(v) |
| cccm_multi_flt_idx | ae(v) |
| .. | |
| } | |
| .. | |
| } | |
| .. | |
| } | |
| .. | |
| intra_chroma_pred_mode | ae(v) |
| .. | |
| } | |

# FIG. 7

| transform_tree( x0, y0, tbWidth, tbHeight, treeType, chType ) { | Descriptor |
|---|---|
| .. | |
| if( ccrmAllowed() ) | |
| **ccrm_flag** | **ae(v)** |
| if( ccrm_flag ) { | |
| **ccrm_merge_flag** | **ae(v)** |
| if( cccm_merge_flag) | |
| **ccrm_merge_idx** | **ae(v)** |
| **ccrm_multi_flt_idx** | **ae(v)** |
| .. | |
| } | |
| } | |
| .. | |
| } | |

# FIG. 8

LUMA REFERENCE IMAGE
ccRefY
CHROMA REFERENCE
IMAGE
ccRefCb, ccRefCr

_3133

LUMA DECODED IMAGE
recY

_313
CCxM PREDICTION UNIT

REFERENCE
IMAGE
FILTER UNIT

_3131
CCxM PREDICTION
PARAMETER
DERIVATION UNIT

CCxM PREDICTION
PARAMETER
_3132
CCxM PREDICTION
FILTER UNIT

CHROMA
PREDICTION IMAGE
predCb'
predCr'

CCxM PREDICTION PARAMETER

307
PREDICTION
PARAMETER
MEMORY

# FIG. 9

FIG. 10

FIG. 11

INTER PREDICTION IMAGE GENERATION UNIT — 309

LUMA PREDICTION IMAGE
predY

LUMA DECODED
IMAGE
recY

305

LUMA DECODED
IMAGE
recY

31044

CCCM PREDICTION UNIT

resiY

NEIGHBORING IMAGE
recY
recCb, recCr

310441

CCxM PREDICTION UNIT

CHROMA
PREDICTION IMAGE
predCb
predCr

CHROMA
DECODED IMAGE
recCb
recCr

305

resiCb,
resiCr

INVERSE
QUANTIZATION AND
INVERSE TRANSFORM
PROCESSING UNIT — 311

resiY
resiCb, resiCr

# FIG. 12

FIG. 13

FIG. 14

# EP 4 787 858 A1

## INTERNATIONAL SEARCH REPORT

| | International application No. |
|---|---|
| | **PCT/JP2024/030185** |

### A. CLASSIFICATION OF SUBJECT MATTER

*H04N 19/593*(2014.01)i; *H04N 19/70*(2014.01)i; *H04N 19/186*(2014.01)i
FI: H04N19/593; H04N19/186; H04N19/70

According to International Patent Classification (IPC) or to both national classification and IPC

### B. FIELDS SEARCHED

Minimum documentation searched (classification system followed by classification symbols)

H04N19/593; H04N19/70; H04N19/186

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | TSAI, Chiaming et al. Non-EE2: Cross-component merge mode for chroma intra coding. Joint Video Experts Team (JVET) of ITU-T SG 16 WP 3 and ISO/IEC JTC 1/SC 29. JVET-AC0315-v1. 13 January 2023<br>    columns 1, 2.2 | 1-3, 9, 11 |
| Y | | 4, 6-8, 10 |
| A | | 5 |
| X | DENG, Zhipin et al. EE2-related: Enhancements on CCRM. Joint Video Experts Team (JVET) of ITU-T SG 16 WP 3 and ISO/IEC JTC 1/SC 29. JVET-AE0176-v2. 12 July 2023<br>    column 2.2 | 1, 3, 11 |
| Y | | 4, 6-8 |
| Y | JP 2023-018046 A (GUANGDONG OPPO MOBILE TELECOMMUNICATIONS CORP., LTD.) 07 February 2023 (2023-02-07)<br>    paragraphs [0434]-[0435] | 4 |
| A | | 5 |

☑ Further documents are listed in the continuation of Box C.　　☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **16 October 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

38

**INTERNATIONAL SEARCH REPORT**

| International application No. |
| --- |
| **PCT/JP2024/030185** |

### C. DOCUMENTS CONSIDERED TO BE RELEVANT

| Category* | Citation of document, with indication, where appropriate, of the relevant passages | Relevant to claim No. |
| --- | --- | --- |
| Y | JP 2023-111920 A (TENCENT AMERICA LLC) 10 August 2023 (2023-08-10)<br>    paragraphs [0115], [0119] | 6,8 |
| Y | JP 2022-509743 A (GUANGDONG OPPO MOBILE TELECOMMUNICATIONS CORP..<br>LTD.) 24 January 2022 (2022-01-24)<br>    paragraphs [0173]-[0176] | 7 |
| Y | JP 2021-010046 A (SHARP KABUSHIKI KAISHA) 28 January 2021 (2021-01-28)<br>    paragraph [0090] | 10 |

Form PCT/ISA/210 (second sheet) (July 2022)

## INTERNATIONAL SEARCH REPORT
### Information on patent family members

International application No.

**PCT/JP2024/030185**

| Patent document cited in search report | | | Publication date (day/month/year) | Patent family member(s) | | | Publication date (day/month/year) |
|---|---|---|---|---|---|---|---|
| JP | 2023-018046 | A | 07 February 2023 | US | 2021/0227212 | A1 | |
| | | | | paragraphs [0451]-[0452] | | | |
| | | | | WO | 2020/096389 | A1 | |
| | | | | EP | 3849184 | A1 | |
| | | | | KR | 10-2020-0054105 | A | |
| | | | | CN | 113170126 | A | |
| JP | 2023-111920 | A | 10 August 2023 | US | 2020/0252621 | A1 | |
| | | | | paragraphs [0127], [0132] | | | |
| | | | | WO | 2020/163029 | A1 | |
| | | | | KR | 10-2021-0079363 | A | |
| | | | | CN | 113396590 | A | |
| JP | 2022-509743 | A | 24 January 2022 | US | 2021/0235075 | A1 | |
| | | | | paragraphs [0213]-[0216] | | | |
| | | | | WO | 2020/096426 | A1 | |
| | | | | EP | 4287622 | A2 | |
| | | | | KR | 10-2020-0054111 | A | |
| | | | | CN | 113039788 | A | |
| JP | 2021-010046 | A | 28 January 2021 | US | 2020/0260096 | A1 | |
| | | | | paragraph [0128] | | | |
| | | | | WO | 2019/069950 | A1 | |

Form PCT/ISA/210 (patent family annex) (July 2022)

**REFERENCES CITED IN THE DESCRIPTION**

**Patent documents cited in the description**

- JP 2023164676 A

**Non-patent literature cited in the description**

- AHG12: Convolutional cross-component model (CCCM) for intraprediction. *Joint Video Exploration Team (JVET) of ITU-T SG 16 WP 3 and ISO/IEC JTC 1/SC 29/WG 11, JVET-Z0064*, 2022

- AHG12: Cross-component residual model (CCRM) for inter prediction. *Joint Video Exploration Team (JVET) of ITU-T SG 16 WP 3 and ISO/IEC JTC1/SC 29/WG 11, JVET-AD0108*, 2023